(19) Europäisches Patentamt
European Patent Office
Office européen des brevets

(11) EP 2 906 621 B1

(12) **EUROPEAN PATENT SPECIFICATION**

(45) Date of publication and mention of the grant of the patent:
**29.07.2020 Bulletin 2020/31**

(21) Application number: **12886341.2**

(22) Date of filing: **11.10.2012**

(51) Int Cl.:
***C08L 23/12*** *(2006.01)* ***C08L 23/10*** *(2006.01)*
***C08L 23/16*** *(2006.01)* ***C08K 3/00*** *(2018.01)*
***C08F 210/06*** *(2006.01)* ***C08K 3/34*** *(2006.01)*

(86) International application number:
**PCT/CN2012/082808**

(87) International publication number:
**WO 2014/056175 (17.04.2014 Gazette 2014/16)**

(54) **HETEROPHASIC POLYPROPYLENE COMPOSITION**

HETEROPHASISCHE POLYPROPYLENZUSAMMENSETZUNG

COMPOSITION DE POLYPROPYLÈNE HÉTÉROPHASIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.08.2015 Bulletin 2015/34**

(73) Proprietors:
- **Abu Dhabi Polymers Co. Ltd (Borouge) LLC.**
  **Abu Dhabi (AE)**
- **Borealis AG**
  **1220 Vienna (AT)**

(72) Inventors:
- **LIM, Shaun**
  **Singapore 530220 (SG)**
- **LAMPELA, Janne**
  **Abu Dhabi (AE)**
- **ZHOU, Susan**
  **Suzhou**
  **Jiangsu 215000 (CN)**
- **ROTHMAYER, Thomas**
  **38102 Braunschweig (DE)**

(74) Representative: **Maiwald Patent- und Rechtsanwaltsgesellschaft mbH**
**Elisenhof**
**Elisenstraße 3**
**80335 München (DE)**

(56) References cited:
**WO-A1-2010/142540** **WO-A1-2010/149549**
**WO-A1-2012/025584** **US-A1- 2003 208 007**

- **Borealis AG: "Polypropylene Borsoft TM SD233CF", , 21 November 2007 (2007-11-21), XP002756347, Retrieved from the Internet: URL:http://www.b2bpolymers.com/TDS/Borealis_SD233CF.pdf [retrieved on 2016-04-12]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 906 621 B1

## Description

The present invention is directed to a new heterophasic polypropylene composition (HECO), a process for preparing such a heterophasic polypropylene composition (HECO) as well as an article comprising such a heterophasic polypropylene composition (HECO) and its use for the preparation of a molded article.

Nowadays, polypropylene is the polymer of choice for many applications such as in the field of packaging materials and automobile parts like bumpers, door panels, dashboards or door claddings. In particular, heterophasic propylene copolymers are suitable as they combine stiffness with good impact behavior. Heterophasic propylene copolymers are well known in the art and comprise a matrix being either a polypropylene homopolymer or a random polypropylene copolymer in which an elastomeric copolymer is dispersed. Thus the polypropylene matrix contains (finely) dispersed inclusions being not part of the matrix and said inclusions contain the elastomer. The term inclusion indicates that the matrix and the inclusion form different phases within the heterophasic propylene copolymer, said inclusions are for instance visible by high resolution microscopy, like electron microscopy or scanning force microscopy.

Even though the heterophasic propylene copolymers on the market achieve a very good balance between stiffness and impact, however there is a continuous need to provide polymers with alternative property balance tailored for particular end application areas. For instance, in many applications like the automobile industry, polymer materials with very well balanced stiffness and impact behavior are required while the elongation of the polymer composition is kept on a high level. In polypropylene applications it is usually difficult to increase the elongation without sacrificing stiffness/impact balance.

WO 2010/142540 A1 discloses an automotive material with excellent flow, high stiffness, excellent ductility and low CLTE, wherein to a composition comprising a heterophasic polypropylene and a mineral filler, a further heterophasic material of higher melt flow is added.

WO 2012/025584 A1 discloses a stiff polypropylene composition with excellent elongation at break and high stiffness, wherein to a heterophasic propylene copolymer with propylene rich elastomeric phase a heterophasic propylene copolymer with low intrinsic viscosity and a polyethylene plastomer with moderate intrinsic viscosity is added.

A very soft random heterophasic copolymer material under the name SD233CF having the CAS-no. 9010-79-1 is available from Borealis AG. This grade is suitable for the manufacturing of unoriented films on chill roll processes.

Thus, the object of the present invention is to provide a polymer composition having a balanced stiffness and impact behavior combined with a high elongation (expressed by a high tensile strain at break). In particular, it is an object of the present invention to provide a polymer composition having a high tensile strain at break, a high stiffness (flexural modulus) as well as an impact behavior (Izod notched at 23 °C).

The foregoing and other objectives are solved by the subject-matter of the present invention. Advantageous embodiments of the inventive heterophasic polypropylene composition are defined in the corresponding sub-claims.

The specific finding of the present invention is to provide a heterophasic polypropylene composition (HECO) comprising two heterophasic propylene copolymers which differ in their tensile strain at break.

According to a first aspect of the present invention, a heterophasic polypropylene composition (HECO) having a melt flow rate $MFR_2$ (230 °C) measured according to ISO 1133 of between 10 and 35 g/10min and a tensile strain at break measured according to ISO 527-2 in the range of between 40 and 150 % is provided, the heterophasic polypropylene composition (HECO) comprises

(a) a heterophasic propylene copolymer (HPP1) comprising a polypropylene matrix (PM1) and an elastomeric propylene copolymer (EP1) dispersed in said matrix (PM1), and

(b) a heterophasic propylene copolymer (HPP2) having a xylene cold soluble (XCS) fraction measured according to ISO 16152 (23 °C) of between 10 and 35 wt.-%, based on the total weight of the heterophasic propylene copolymer (HPP2), and comprising a polypropylene matrix (PM2) and an elastomeric propylene copolymer (EP2) dispersed in said matrix (PM2),

wherein

(i) the heterophasic propylene copolymer (HPP1) has lower tensile strain at break value measured according to ISO 527-2 than the heterophasic propylene copolymer (HPP2),

(ii) the amount of the heterophasic propylene copolymer (HPP1) is in the range of 75.0 to 99.0 wt.-% based on the total amount of the heterophasic propylene copolymer (HPP1) and the heterophasic propylene copolymer (HPP2) together,

(iii) the amount of the heterophasic propylene copolymer (HPP2) is in the range of 1.0 to 25.0 wt.-% based on the total amount of the heterophasic propylene copolymer (HPP1) and the heterophasic propylene copolymer (HPP2) together,

(iv) the elastomeric propylene copolymer (EP1) differs from the elastomeric propylene copolymer (EP2), and

(v) the polypropylene matrix (PM1) differs from the polypropylene matrix (PM2).

The weight of the heterophasic propylene copolymer (HPP1) and of the heterophasic propylene copolymer (HPP2) are based on the total weight of the heterophasic polypropylene composition (HECO), preferably based on the total amount of the weight of the heterophasic propylene copolymer (HPP1) and of the heterophasic propylene copolymer (HPP2).

It has been surprisingly found out that the composition according to this invention possess very well balanced stiffness and impact behavior combined with a high tensile strain at break. The inventors have surprisingly found that the combination of heterophasic propylene copolymer (HPP1) with claimed amounts of heterophasic propylene copolymer (HPP2) having claimed rather high xylene cold soluble (XCS) fraction and higher tensile strain at break value than the heterophasic propylene copolymer (HPP1) results in a polymer composition with unexpectedly increased tensile strain at break value compared to the sole heterophasic propylene copolymer (HPP1). Additionally, and also unexpectedly, a very advantageous stiffness/impact balance can be achieved within the desired melt flow $MFR_2$ range as claimed in claim 1. Such property balance is highly desirable in moulding applications, for instance in mobility applications, preferably in those vehicles, preferably cars, parts wherein such balanced property combination is highly desirable.

It is apparent from the wording used for the different polymers (HPP1, HPP2, PM1, PM2, EP1 and EP2) according to the present invention that they must (chemically) differ from each other. For instance, the polypropylene matrix (PM1) and the polypropylene matrix (PM2) are crystalline or semi-crystalline polymers and thus not soluble or only to some extent soluble, i.e. equal or below 5 wt.-%, in cold xylene, whereas the elastomeric propylene copolymer (EP1 or EP2) are predominantly non-crystalline and thus soluble or readily soluble in cold xylene, i.e. at least 80 wt.-% of the elastomeric propylene copolymer (EP1 or EP2) are soluble in cold xylene. Furthermore, the elastomeric propylene copolymer (EP1) chemically differs from the elastomeric propylene copolymer (EP2). In one embodiment the elastomeric propylene copolymer (EP1) differs from the elastomeric propylene copolymer (EP2) in the propylene content. The polypropylene matrix (PM1) chemically differs from the polypropylene matrix (PM2), for instance in the comonomer content and/or melt flow rate. Preferably, the polypropylene matrix (PM1) differs from the polypropylene matrix (PM2) in the flowability, i.e. in the melt flow rate.

The expression "heterophasic" indicates that an elastomeric copolymer is (finely) dispersed in a matrix. In other words, the elastomeric propylene copolymer forms inclusions in the matrix. Thus, the matrix contains (finely) dispersed inclusions being not part of the matrix and said inclusions contain the elastomeric propylene copolymer. The term "inclusion" according to this invention shall preferably indicate that the matrix and the inclusion form different phases within the heterophasic propylene copolymer, said inclusions are for instance visible by high resolution microscopy, like electron microscopy or scanning force microscopy.

According to another aspect of the present invention, a process for preparing said heterophasic polypropylene composition (HECO) is provided, the process comprising the steps of:

a) blending the heterophasic propylene copolymer (HPP1) with the heterophasic propylene copolymer (HPP2) and optional additives in an extruder, and

b) extruding the obtained blend of the heterophasic propylene copolymer (HPP1), the heterophasic propylene copolymer (HPP2) and optional additives in an extruder for forming extruded articles or for further introducing the obtained extruded blend to a further molding step for forming injection or blown molded, preferably injection molded articles.

Extruded articles can be end application articles or, and preferably are, pellets of said heterophasic polypropylene composition (HECO).

The molded, preferably injection molded articles are for moulding applications, preferably for mobility applications, more preferably vehicle parts, even more preferably car parts, most preferably interior car parts.

It is preferred that the heterophasic propylene copolymer (HPP1) is obtained by producing the polypropylene matrix (PM1) in at least one reactor system, said system comprises at least one reactor, transferring said polypropylene matrix (PM1) in a subsequent reactor system, said system comprises at least one reactor, where in the presence of the polypropylene matrix (PM1) the elastomeric propylene copolymer (EP1) is produced and/or the heterophasic propylene copolymer (HPP2) is obtained by producing the polypropylene matrix (PM2) in at least one reactor system, said system comprises at least one reactor, transferring said polypropylene matrix (PM2) in a subsequent reactor system, said system comprises at least one reactor, where in the presence of the polypropylene matrix (PM2) the elastomeric propylene copolymer (EP2) is produced.

A further aspect of the present invention is directed to an article comprising the heterophasic polypropylene composition (HECO). A still further aspect of the present invention is directed to the use of said heterophasic polypropylene composition (HECO) for the preparation of a molded article, preferably an injected molded article or a blow molded article.

When in the following reference is made to preferred embodiments or technical details of the inventive heterophasic polypropylene composition (HECO), it is to be understood that these preferred embodiments or technical details also refer to the inventive process for the preparation of the heterophasic polypropylene composition (HECO), the

inventive article comprising the heterophasic polypropylene composition (HECO) as well as the inventive use of the heterophasic polypropylene composition (HECO) for the preparation of a molded article. If, for example, it is set out that the inventive heterophasic polypropylene composition (HECO) preferably has a melt flow rate $MFR_2$ (230 °C) measured according to ISO 1133 of between 10 and 35 g/10min, also the heterophasic polypropylene composition (HECO) obtained in the inventive process or provided in the inventive article as well as the inventive use preferably has a melt flow rate $MFR_2$ (230 °C) measured according to ISO 1133 of between 10 and 35 g/10min.

According to one preferred embodiment of the present invention, the elastomeric propylene copolymer (EP1) dispersed in the polypropylene matrix (PM1) and/or the elastomeric propylene copolymer (EP2) dispersed in the polypropylene matrix (PM2) comprises/comprise propylene monomer units and comonomer units selected from ethylene and/or $C_4$ to $C_{12}$ $\alpha$-olefin, preferably ethylene.

According to another preferred embodiment of the present invention, the a) heterophasic propylene copolymer (HPP1) has a xylene cold soluble (XCS) fraction measured according to ISO 16152 (25 °C) of between 10 and 35 wt.-%, preferably of between 12 and 30 wt.-% and most preferably of between 15 and 25 wt.-%, based on the total weight of the heterophasic propylene copolymer (HPP1), and/or b) heterophasic propylene copolymer (HPP2) has a xylene cold soluble (XCS) fraction measured according to ISO 16152 (25 °C) of between 14 and 30 wt.-% and most preferably of between 15 and 28 wt.-%, based on the total weight of the heterophasic propylene copolymer (HPP2).

According to yet another preferred embodiment of the present invention, the heterophasic propylene copolymer (HPP1) has a) a melt flow rate $MFR_2$ (230 °C) measured according to ISO 1133 of between 10 and 35 g/10min, preferably of between 12 and 30 g/10min and most preferably of between 15 and 25 g/10min, and/or b) a comonomer content of between 5 and 20 wt.-%, preferably of between 5 and 15 wt.-% and most preferably of between 5 and 10 wt.-% based on the total weight of the heterophasic propylene copolymer (HPP1), wherein the comonomers are ethylene and/or $C_4$ to $C_{12}$ $\alpha$-olefin, and/or c) a tensile strain at break measured according to ISO 527-2 of $\leq$ 50 %, more preferably of $\leq$ 45 %, still more preferably between 10 to 45 %, and yet more preferably of between 10 and 40 %.

According to one preferred embodiment of the present invention, the heterophasic propylene copolymer (HPP2) has a) a melt flow rate $MFR_2$ (230 °C) measured according to ISO 1133 of between 5 and 25 g/10min, preferably of between 5 and 20 g/10min and most preferably of between 8 and 15 g/10min, and/or b) a comonomer content of between 5 and 20 wt.-%, preferably of between 5 and 18 wt.-% and most preferably of between 8 and 15 wt.-% based on the total weight of the heterophasic propylene copolymer (HPP2), wherein the comonomers are ethylene and/or $C_4$ to $C_{12}$ $\alpha$-olefin, and/or c) a tensile strain at break measured according to ISO 527-2 of at least 150 %, more preferably of at least 180 % and most preferably of between 200 and 400 %.

According to one preferred embodiment of the present invention, the heterophasic polypropylene composition (HECO) comprises a) the heterophasic propylene copolymer (HPP1) in an amount from 80 to 98 wt.-% and the heterophasic propylene copolymer (HPP2) in an amount from 2 to 20 wt.-%, based on the total weight of the heterophasic polypropylene composition (HECO), preferably based on the total weight of the heterophasic propylene copolymer (HPP1) and the heterophasic propylene copolymer (HPP2) together, or b) the heterophasic propylene copolymer (HPP1) in an amount from 85 to 97 wt.-% and the heterophasic propylene copolymer (HPP2) in an amount from 3 to 15 wt.-%, based on the total weight of the heterophasic polypropylene composition (HECO), preferably based on the total weight of the heterophasic propylene copolymer (HPP1) and the heterophasic propylene copolymer (HPP2) together.

According to another preferred embodiment of the present invention, the tensile strain at break for the heterophasic propylene copolymer (HPP2) differs from the tensile strain at break for the heterophasic propylene copolymer (HPP1) by a value of more than 100 %, more preferably by a value of more than 130 %, still more preferably by a value of more than 150 % and yet more preferably by a value of more than 180 %, wherein the difference is calculated by the formula

$$\text{TSaB [HPP2]} - \text{TSaB [HPP1]}$$

wherein

TSaB [HPP2] is the tensile strain at break value measured according to ISO 527-2 for the heterophasic propylene copolymer (HPP2), and
TSaB [HPP1] is the tensile strain at break value measured according to ISO 527-2 for the heterophasic propylene copolymer (HPP1).

According to yet another preferred embodiment of the present invention, the heterophasic polypropylene composition (HECO) has a) a melt flow rate $MFR_2$ (230 °C) measured according to ISO 1133 of between 10 and 35 g/10min, preferably of between 12 and 30 g/10min and most preferably of between 15 and 25 g/10min, and/or b) a xylene cold

soluble (XCS) fraction measured according to ISO 16152 (25 °C) of between 10 and 35 wt.-%, preferably of between 14 and 30 wt.-% and most preferably of between 15 and 28 wt.-%, and/or c) a comonomer content of between 5 and 20 wt.-%, preferably of between 5 and 18 wt.-% and most preferably of between 8 and 15 wt.-% based on the total weight of the heterophasic polypropylene composition (HECO), wherein the comonomers are ethylene and/or $C_4$ to $C_{12}$ $\alpha$-olefin, preferably ethylene, and/or d) a flexural modulus measured according to ISO 178 of at least 1200 MPa, preferably of between 1200 and 1800 MPa and most preferably of between 1300 and 1600 MPa, and/or e) a tensile strain at break measured according to ISO 527-2 of at least 40 %, more preferably of at least 50 % and most preferably of between 60 and 150 %.

According to one preferred embodiment of the present invention, the heterophasic propylene copolymer (HPP1) and/or the heterophasic propylene copolymer (HPP2) are/is $\alpha$-nucleated, preferably the heterophasic propylene copolymer (HPP1) and the heterophasic propylene copolymer (HPP2) are $\alpha$-nucleated. Accordingly in one preferred embodiment the heterophasic polypropylene composition (HECO) is $\alpha$-nucleated. Preferably the $\alpha$-nucleation is accomplished by the use of BNT technology, i.e. by vinylcycloalkane polymer and/or by vinylalkane polymer.

According to another preferred embodiment of the present invention, the heterophasic polypropylene composition (HECO) comprises at least one UV light stabilizer, preferably at least one hindered amine light stabilizer.

According to yet another preferred embodiment of the present invention, the heterophasic polypropylene composition (HECO) comprises at least one UV stabilizer in an amount of between 0.1 and 0.5 wt.-% and preferably in an amount of between 0.1 and 0.3 wt.-%, based on the total weight of the heterophasic polypropylene composition (HECO).

In the following the invention is described in more detail.

Preferably, the heterophasic polypropylene composition (HECO) according to this invention comprises as polymer components only the heterophasic propylene copolymer (HPP1) and heterophasic propylene copolymer (HPP2). More precisely, the heterophasic polypropylene composition (HECO) according to this invention preferably comprises as polymer components only the polypropylene matrix (PM1), the elastomeric propylene copolymer (EP1), the polypropylene matrix (PM2) and the elastomeric propylene copolymer (EP2). In other words, the heterophasic polypropylene composition (HECO) may contain further additives but in a preferred embodiment no other polymer in an amount exceeding 5 wt.-%, more preferably exceeding 2 wt.-%, yet more preferably exceeding 2 wt.-%, based on the total weight of the heterophasic polypropylene composition (HECO). One additional polymer which may be present in such low amounts is a polyethylene which is a by-reaction product obtained by the preparation of the respective heterophasic propylene copolymers (HPP1 and/or HPP2) being part of the heterophasic polypropylene composition (HECO). Accordingly, it is appreciated that the instant heterophasic polypropylene composition (HECO) contains only the polypropylene matrix (PM1), the elastomeric propylene copolymer (EP1), the polypropylene matrix (PM2) and the elastomeric propylene copolymer (EP2) and optionally polyethylene in amounts as mentioned in this paragraph as polymer components.

It is one requirement of the present invention that the heterophasic polypropylene composition (HECO) is featured by a desired melt flow rate. Preferably the heterophasic polypropylene composition (HECO) has a melt flow rate $MFR_2$ (230 °C) measured according to ISO 1133 of between 12 and 30 g/10min and most preferably of between 15 and 25 g/10min.

In one preferred embodiment of the present invention, the heterophasic polypropylene composition (HECO) is preferably featured by a high stiffness, i.e. a flexural modulus measured according to ISO 178 of at least 1200 MPa and preferably of between 1200 and 1800 MPa. For example, the inventive heterophasic polypropylene composition (HECO) is featured by a flexural modulus measured according to ISO 178 of between 1300 and 1600 MPa.

Additionally or alternatively, also the impact strength is preferably rather high. It is thus appreciated that the heterophasic polypropylene composition (HECO) is preferably featured by an Izod notched impact strength measured according to ISO 180 (1A; 23 °C) of at least 5 kJ/$m^2$ and more preferably of at least 6.5 kJ/$m^2$. For example, the heterophasic polypropylene composition (HECO) is preferably featured by an Izod notched impact strength measured according to ISO 180 (1A; 23 °C) in the range of 5 to 15 kJ/$m^2$, preferably in the range of 6.5 to 12 kJ/$m^2$.

Additionally or alternatively, the heterophasic polypropylene composition (HECO) is featured by a tensile strain at break measured according to ISO 527-2 in the range of between 40 to 150 %, i.e. of at least 40 % and more preferably of at least 50 %. For example, the heterophasic polypropylene composition (HECO) is preferably featured by a tensile strain at break measured according to ISO 527-2 of between 50 and 150 %, like 60 to 100 %.

Preferably, the propylene content in the heterophasic polypropylene composition (HECO) is of between 80 and 95 wt.-%, preferably of between 82 and 95 wt.-% and most preferably of between 85 and 92 wt.-% based on the total weight of the heterophasic polypropylene composition (HECO), preferably based on the total amount of the heterophasic propylene copolymer (HPP1) and the heterophasic propylene copolymer (HPP2) together. The remaining part constitutes the comonomers as defined for the elastomeric propylene copolymer (EP1) and elastomeric propylene copolymer (EP2). Accordingly, the comonomer content, preferably ethylene content, is of between 5 and 20 wt.-%, preferably of between 5 and 18 wt.-% and most preferably of between 7 and 15 wt.-% based on the total weight of the heterophasic polypropylene composition (HECO), preferably based on the total amount of the heterophasic propylene copolymer (HPP1) and the heterophasic propylene copolymer (HPP2) together.

Thus, it is appreciated that the heterophasic polypropylene composition (HECO) comprises apart from propylene also comonomers. Preferably, the heterophasic polypropylene composition (HECO) comprises apart from propylene ethylene and/or $C_4$ to $C_{12}$ $\alpha$-olefins.

For example, the heterophasic polypropylene composition (HECO) comprises apart from propylene units derivable from ethylene.

The xylene cold soluble (XCS) fraction of the instant heterophasic polypropylene composition (HECO) is very dependent on the amount of the elastomeric propylene copolymers (EP1) and (EP2), as these polymers are completely soluble or nearby completely soluble in cold xylene whereas the remaining polymer components, i.e. the polypropylene matrices (PM1) and (PM2) of the polypropylene composition are almost insoluble in cold xylene. Accordingly, it is appreciated that the xylene cold soluble (XCS) fraction of the heterophasic polypropylene composition (HECO) measured according to ISO 16152 (25 °C) is of between 10 and 35 wt.-%, preferably of between 14 and 30 wt.-% and most preferably of between 15 and 28 wt.-%, based on the total weight of the heterophasic polypropylene composition (HECO), preferably based on the total amount of the heterophasic propylene copolymer (HPP1) and the heterophasic propylene copolymer (HPP2) together.

Thus, it is appreciated that the heterophasic polypropylene composition (HECO) has a comonomer content of between 5 and 20 wt.-%, preferably of between 5 and 18 wt.-% and most preferably of between 8 and 15 wt.-%, based on the total weight of the heterophasic polypropylene composition (HECO) (preferably based on the total amount of the heterophasic propylene copolymer (HPP1) and the heterophasic propylene copolymer (HPP2) together), a xylene cold soluble (XCS) fraction measured according to ISO 16152 (25 °C) of between 10 and 35 wt.-%, based on the total weight of the heterophasic polypropylene composition (HECO) (preferably based on the total amount of the heterophasic propylene copolymer (HPP1) and the heterophasic propylene copolymer (HPP2) together) and a melt flow rate $MFR_2$ (230 °C) measured according to ISO 1133 of between 10 and 35 g/10min.

In a further preferred embodiment of the present invention, the heterophasic polypropylene composition (HECO) has a comonomer content of between 5 and 20 wt.-%, preferably of between 5 and 18 wt.-% and most preferably of between 8 and 15 wt.-%, based on the total weight of the heterophasic polypropylene composition (HECO), preferably based on the total amount of the heterophasic propylene copolymer (HPP1) and the heterophasic propylene copolymer (HPP2) together, a xylene cold soluble (XCS) fraction measured according to ISO 16152 (25 °C) of between 10 and 35 wt.-%, based on the total weight of the heterophasic polypropylene composition (HECO), preferably based on the total amount of the heterophasic propylene copolymer (HPP1) and the heterophasic propylene copolymer (HPP2) together, and a melt flow rate $MFR_2$ (230 °C) measured according to ISO 1133 of between 12 and 30 g/10min.

In a further preferred embodiment of the present invention, the heterophasic polypropylene composition (HECO) has a comonomer content of between 5 and 20 wt.-%, preferably of between 5 and 18 wt.-% and most preferably of between 8 and 15 wt.-%, based on the total weight of the heterophasic polypropylene composition (HECO), preferably based on the total amount of the heterophasic propylene copolymer (HPP1) and the heterophasic propylene copolymer (HPP2) together, a xylene cold soluble (XCS) fraction measured according to ISO 16152 (25 °C) of between 10 and 35 wt.-%, based on the total weight of the heterophasic polypropylene composition (HECO), preferably based on the total amount of the heterophasic propylene copolymer (HPP1) and the heterophasic propylene copolymer (HPP2) together, and a melt flow rate $MFR_2$ (230 °C) measured according to ISO 1133 of between 15 and 25 g/10min.

In another preferred embodiment of the present invention, the heterophasic polypropylene composition (HECO) has a comonomer content of between 5 and 20 wt.-%, preferably of between 5 and 18 wt.-% and most preferably of between 8 and 15 wt.-%, based on the total weight of the heterophasic polypropylene composition (HECO), preferably based on the total amount of the heterophasic propylene copolymer (HPP1) and the heterophasic propylene copolymer (HPP2) together, a xylene cold soluble (XCS) fraction measured according to ISO 16152 (25 °C) of between 14 and 30 wt.-%, based on the total weight of the heterophasic polypropylene composition (HECO), preferably based on the total amount of the heterophasic propylene copolymer (HPP1) and the heterophasic propylene copolymer (HPP2) together, and a melt flow rate $MFR_2$ (230 °C) measured according to ISO 1133 of between 10 and 35 g/10min.

In a further preferred embodiment of the present invention, the heterophasic polypropylene composition (HECO) has a comonomer content of between 5 and 20 wt.-%, preferably of between 5 and 18 wt.-% and most preferably of between 8 and 15 wt.-%, based on the total weight of the heterophasic polypropylene composition (HECO), preferably based on the total amount of the heterophasic propylene copolymer (HPP1) and the heterophasic propylene copolymer (HPP2) together, a xylene cold soluble (XCS) fraction measured according to ISO 16152 (25 °C) of between 14 and 30 wt.-%, based on the total weight of the heterophasic polypropylene composition (HECO), preferably based on the total amount of the heterophasic propylene copolymer (HPP1) and the heterophasic propylene copolymer (HPP2) together, and a melt flow rate $MFR_2$ (230 °C) measured according to ISO 1133 of between 12 and 30 g/10min.

In another preferred embodiment of the present invention, the heterophasic polypropylene composition (HECO) has a comonomer content of between 5 and 20 wt.-%, preferably of between 5 and 18 wt.-% and most preferably of between 8 and 15 wt.-%, based on the total weight of the heterophasic polypropylene composition (HECO), preferably based on the total amount of the heterophasic propylene copolymer (HPP1) and the heterophasic propylene copolymer (HPP2) together, a xylene cold soluble (XCS) fraction measured according to ISO 16152 (25 °C) of between 14 and 30

(HPP2) together, a xylene cold soluble (XCS) fraction measured according to ISO 16152 (25 °C) of between 14 and 30 wt.-%, based on the total weight of the heterophasic polypropylene composition (HECO), preferably based on the total amount of the heterophasic propylene copolymer (HPP1) and the heterophasic propylene copolymer (HPP2) together, and a melt flow rate $MFR_2$ (230 °C) measured according to ISO 1133 of between 15 and 25 g/10min.

In another preferred embodiment of the present invention, the heterophasic polypropylene composition (HECO) has a comonomer content of between 5 and 20 wt.-%, preferably of between 5 and 18 wt.-% and most preferably of between 8 and 15 wt.-%, based on the total weight of the heterophasic polypropylene composition (HECO), preferably based on the total amount of the heterophasic propylene copolymer (HPP1) and the heterophasic propylene copolymer (HPP2) together, a xylene cold soluble (XCS) fraction measured according to ISO 16152 (25 °C) of between 15 and 28 wt.-%, based on the total weight of the heterophasic polypropylene composition (HECO), preferably based on the total amount of the heterophasic propylene copolymer (HPP1) and the heterophasic propylene copolymer (HPP2) together, and a melt flow rate $MFR_2$ (230 °C) measured according to ISO 1133 of between 10 and 35 g/10min.

In a further preferred embodiment of the present invention, the heterophasic polypropylene composition (HECO) has a comonomer content of between 5 and 20 wt.-%, preferably of between 5 and 18 wt.-% and most preferably of between 8 and 15 wt.-%, based on the total weight of the heterophasic polypropylene composition (HECO), preferably based on the total amount of the heterophasic propylene copolymer (HPP1) and the heterophasic propylene copolymer (HPP2) together, a xylene cold soluble (XCS) fraction measured according to ISO 16152 (25 °C) of between 15 and 28 wt.-%, based on the total weight of the heterophasic polypropylene composition (HECO), preferably based on the total amount of the heterophasic propylene copolymer (HPP1) and the heterophasic propylene copolymer (HPP2) together, and a melt flow rate $MFR_2$ (230 °C) measured according to ISO 1133 of between 12 and 30 g/10min.

In another preferred embodiment of the present invention, the heterophasic polypropylene composition (HECO) has a comonomer content of between 5 and 20 wt.-%, preferably of between 5 and 18 wt.-% and most preferably of between 8 and 15 wt.-%, based on the total weight of the heterophasic polypropylene composition (HECO), preferably based on the total amount of the heterophasic propylene copolymer (HPP1) and the heterophasic propylene copolymer (HPP2) together, a xylene cold soluble (XCS) fraction measured according to ISO 16152 (25 °C) of between 15 and 28 wt.-%, based on the total weight of the heterophasic polypropylene composition (HECO), preferably based on the total amount of the heterophasic propylene copolymer (HPP1) and the heterophasic propylene copolymer (HPP2) together, and a melt flow rate $MFR_2$ (230 °C) measured according to ISO 1133 of between 15 and 25 g/10min.

It is further appreciated that the instant heterophasic polypropylene composition (HECO) comprises the heterophasic propylene copolymer (HPP1) in an amount of between 75 to 99 wt.-%, based on the total weight of the heterophasic polypropylene composition (HECO), preferably based on the total amount of the weight of the heterophasic propylene copolymer (HPP1) and of the heterophasic propylene copolymer (HPP2) together, and the heterophasic propylene copolymer (HPP2) in an amount of between 1 to 25 wt.-%, based on the total weight of the heterophasic polypropylene composition (HECO), preferably based on the total amount of the weight of the heterophasic propylene copolymer (HPP1) and of the heterophasic propylene copolymer (HPP2) together.

In one preferred embodiment of the present invention, the heterophasic polypropylene composition (HECO) comprises the heterophasic propylene copolymer (HPP1) in an amount from 80 to 98 wt.-% and the heterophasic propylene copolymer (HPP2) in an amount from 2 to 20 wt.-%, based on the total weight of the heterophasic polypropylene composition (HECO), preferably based on the total amount of the weight of the heterophasic propylene copolymer (HPP1) and of the heterophasic propylene copolymer (HPP2) together. Alternatively, the heterophasic polypropylene composition (HECO) comprises the heterophasic propylene copolymer (HPP1) in an amount from 85 to 97 wt.-% and the heterophasic propylene copolymer (HPP2) in an amount from 3 to 15 wt.-%, based on the total weight of the heterophasic polypropylene composition (HECO), preferably based on the total amount of the weight of the heterophasic propylene copolymer (HPP1) and of the heterophasic propylene copolymer (HPP2) together.

The heterophasic polypropylene composition (HECO) is in particular defined by the heterophasic propylene copolymer (HPP1) comprising a polypropylene matrix (PM1) and an elastomeric propylene copolymer (EP1) dispersed in the matrix (PM1) and the heterophasic propylene copolymer (HPP2) comprising a polypropylene matrix (PM2) and an elastomeric propylene copolymer (EP2) dispersed in the matrix (PM2).

Accordingly all components are now defined in more detail.

Accordingly, the heterophasic propylene copolymer (HPP1) being part of the heterophasic polypropylene composition (HECO) comprises apart from propylene also comonomers. Preferably, the heterophasic propylene copolymer (HPP1) being part of the heterophasic polypropylene composition (HECO) comprises apart from propylene ethylene and/or $C_4$ to $C_{12}$ $\alpha$-olefins. Accordingly, the term heterophasic propylene copolymer (HPP1) according to this invention is understood as a polypropylene comprising, preferably consisting of, units derivable from

(a) propylene
and
(b) ethylene and/or $C_4$ to $C_{12}$ $\alpha$-olefins.

Thus, the heterophasic propylene copolymer (HPP1) according to this invention, i.e. the heterophasic propylene copolymer (HPP1) being part of the heterophasic propylene copolymer (HECO), comprises monomers copolymerizable with propylene, for example comonomers such as ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably, the heterophasic propylene copolymer (HPP1) according to this invention comprises, especially consists of, monomers copolymerizable with propylene from the group consisting of ethylene, 1-butene and 1-hexene. More specifically, the heterophasic propylene copolymer (HPP1) of this invention comprises - apart from propylene - units derivable from ethylene and/or 1-butene. In a preferred embodiment, the heterophasic propylene copolymer (HPP1) according to this invention comprises units derivable from propylene and ethylene only. Still more preferably only the elastomeric propylene copolymer (EP1) contains ethylene comonomers.

The polypropylene matrix (PM1) is preferably a random polypropylene copolymer matrix (R-PPM1) or a polypropylene homopolymer matrix (H-MPP1), the latter being especially preferred.

Accordingly the comonomer content of the polypropylene matrix (PM1) is equal or below 3.0 wt.-%, yet more preferably not more than 2.0 wt.-%, still more preferably not more than 1.0 wt.-%, still yet more preferably not more than 0.5 wt.-%, like not more than 0.2 wt.-%.

As mentioned above the polypropylene matrix (PM1) is preferably a polypropylene homopolymer matrix (H-MPP1).

The expression polypropylene homopolymer or polypropylene homopolymer matrix (PM1) or (PM2) as used throughout the instant invention relates to a polypropylene that consists substantially, i.e. of equal or more than 99.5 wt.-% or of equal or more than 99.8 wt.-%, of propylene units. In a preferred embodiment only propylene units in the polypropylene homopolymer are detectable.

In case the polypropylene matrix (PM1) is a random polypropylene copolymer matrix (R-PPM1) it is appreciated that the a random polypropylene copolymer matrix (R-PPM1) comprises monomers copolymerizable with propylene, for example comonomers such as ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably the random polypropylene copolymer matrix (R-PPM1) according to this invention comprises, especially consists of, monomers copolymerizable with propylene from the group consisting of ethylene, 1-butene and 1-hexene. More specifically the random polypropylene copolymer matrix (R-PPM1) of this invention comprises - apart from propylene - units derivable from ethylene and/or 1-butene. In a preferred embodiment the random polypropylene copolymer matrix (R-PPM1) comprises units derivable from ethylene and propylene only.

Additionally it is appreciated that the random polypropylene copolymer matrix (R-PPM1) has preferably a comonomer content in the range of more than 0.5 to 3.0 wt.-%, more preferably in the range of more than 0.5 to 2.0 wt.-%, yet more preferably in the range of 0.5 to 1.0 wt.-%.

The term "random" indicates that the comonomers of the random polypropylene copolymer matrix (R-PPM1) or of the random polypropylene copolymer matrix (R-PPM2) are randomly distributed within the propylene copolymer. The term random is understood according to IUPAC (Glossary of basic terms in polymer science; IUPAC recommendations 1996).

The elastomeric propylene copolymer (EP1) is preferably an ethylene propylene rubber (EPR), whereas the matrix in which the elastomeric propylene copolymer (EP1) is dispersed is a polypropylene matrix (PM1) which is most preferably a polypropylene homopolymer matrix (H-MPP1).

It is appreciated that the heterophasic propylene copolymer (HPP1) being part of the heterophasic polypropylene composition (HECO) preferably has a comonomer content, preferably ethylene content, of between 5 and 20 wt.-%, preferably of between 5 and 15 wt.-% and most preferably of between 5 and 10 wt.-% based on the total weight of the heterophasic propylene copolymer (HPP1).

The xylene cold soluble (XCS) fraction measured according to ISO 16152 (25 °C) of the heterophasic propylene copolymer (HPP1) being part of the heterophasic polypropylene composition (HECO) is preferably of between 10 and 35 wt.-%, preferably of between 12 and 30 wt.-% and most preferably of between 15 and 25 wt.-%, based on the total weight of the heterophasic propylene copolymer (HPP1) being part of the heterophasic polypropylene composition (HECO).

Additionally or alternatively, the heterophasic propylene copolymer (HPP1) being part of the heterophasic polypropylene composition (HECO) has a melt flow rate $MFR_2$ (230 °C) measured according to ISO 1133 of between 10 and 35 g/10min and preferably of between 12 and 30 g/10min. For example, the heterophasic propylene copolymer (HPP1) being part of the heterophasic polypropylene composition (HECO) has a melt flow rate $MFR_2$ (230 °C) measured according to ISO 1133 of between 15 and 25 g/10min.

Thus, in a preferred embodiment of the present invention, the heterophasic propylene copolymer (HPP1) being part of the heterophasic polypropylene composition (HECO) has

(a) a comonomer content of between 5 and 20 wt.-%, preferably of between 5 and 15 wt.-%, more preferably between 5 and 10 wt.-%, based on the total weight of the heterophasic propylene copolymer (HPP1),
and/or

(b) a xylene cold soluble (XCS) fraction measured according to ISO 16152 (25 °C) of between 10 and 35 wt.-%, preferably of between 12 and 30 wt.-%, more preferably between 15 and 25 wt.-%, based on the total weight of the heterophasic propylene copolymer (HPP1) being part of the heterophasic polypropylene composition (HECO) and/or

(c) and a melt flow rate $MFR_2$ (230 °C) measured according to ISO 1133 of between 10 and 35 g/10min, preferably between 12 and 30 g/10min, more preferably between 15 and 25 g/10min.

Additionally or alternatively, the heterophasic propylene copolymer (HPP1) being part of the heterophasic polypropylene composition (HECO) has a tensile strain at break measured according to ISO 527-2 of ≤ 50 % or of ≤ 45 %, still more preferably between 10 and 45, and yet more preferably of between 10 and 40 %. For example, the heterophasic propylene copolymer (HPP1) being part of the heterophasic polypropylene composition (HECO) has a tensile strain at break measured according to ISO 527-2 between 10 and 40 %.

The xylene cold soluble (XCS) fraction of the polypropylene matrix (PM1), preferably of the polypropylene homopolymer matrix (H-MPP1), being part of the heterophasic propylene copolymer (HPP1) is rather moderate. Accordingly, the xylene cold soluble (XCS) fraction of the polypropylene matrix (PM1), preferably of the polypropylene homopolymer matrix (H-MPP1), is preferably equal or below 5 wt.-%, more preferably equal or below 4.5 wt.-% and still more preferably in the range of 0.5 to 5 wt.-%. For example, the xylene cold soluble (XCS) fraction of the polypropylene matrix (PM1), preferably of the polypropylene homopolymer matrix (H-MPP1), is in the range of 0.5 to 4 wt.-%, preferably in the range of 1 to 4 wt.-%, more preferably in the range of 1 to 3 wt.-% and most preferably in the range of 1 to 2 wt.-%. The weight percentage is based on the total weight of the polypropylene matrix (PM1), preferably of the polypropylene homopolymer matrix (H-MPP1).

Furthermore, the polypropylene matrix (PM1), preferably the polypropylene homopolymer matrix (H-MPP1), being part of the heterophasic propylene copolymer (HPP1) has a rather high melt flow rate. Accordingly, it is preferred that the polypropylene matrix (PM1), preferably the polypropylene homopolymer matrix (H-MPP1), has a melt flow rate $MFR_2$ (230 °C) measured according to ISO 1133 in the range of 10 to 100 g/10min, preferably in the range of 20 to 80 g/10 min and most preferably in the range of 30 to 60 g/10 min.

Concerning the comonomers used in the elastomeric propylene copolymer (EP1) it is referred to the information provided for the heterophasic propylene copolymer (HPP1). Accordingly, the elastomeric propylene copolymer (EP1) comprises monomers copolymerizable with propylene, for example comonomers such as ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably, the elastomeric propylene copolymer (EP1) comprises, especially consists of, monomers copolymerizable with propylene from the group consisting of ethylene, 1-butene and 1-hexene. More specifically, the elastomeric propylene copolymer (EP1) comprises - apart from propylene - units derivable from ethylene and/or 1-butene. Thus, in an especially preferred embodiment the elastomeric propylene copolymer (EP1) comprises units derivable from propylene and ethylene only.

It is thus appreciated that the elastomeric propylene copolymer (EP1) dispersed in the polypropylene matrix (PM1), preferably in the polypropylene homopolymer matrix (H-MPP1), comprises propylene monomer units and comonomer units selected from ethylene and/or $C_4$ to $C_{12}$ $\alpha$-olefin. For example, the elastomeric propylene copolymer (EP1) dispersed in the polypropylene matrix (PM1), preferably in the polypropylene homopolymer matrix (H-MPP1), comprises, preferably consists of, propylene monomer units and ethylene comonomer units.

In one preferred embodiment of the present invention, the heterophasic propylene copolymer (HPP1) being part of the heterophasic polypropylene composition (HECO) comprises the elastomeric propylene copolymer (EP1) in an amount of between of 10 to 35 wt.-%, more preferably in an amount of between of 12 to 30 wt.-% and most preferably in an amount of between of 15 to 25 wt.-%, based on the total amount of the heterophasic propylene copolymer (HPP1) comprising the polypropylene matrix (PM1), preferably the polypropylene homopolymer matrix (H-MPP 1), and the elastomeric propylene copolymer (EP1).

The properties of the elastomeric propylene copolymer (EP1) mainly influences the xylene cold soluble (XCS) fraction of the polypropylene matrix (PM1), preferably of the polypropylene homopolymer matrix (H-MPP 1), being part of the heterophasic polypropylene composition (HECO). Thus, according to the present invention the xylene cold soluble fraction of the heterophasic propylene copolymer (HPP1) being part of the heterophasic polypropylene composition (HECO) is regarded as the elastomeric propylene copolymer (EP1) of the heterophasic propylene copolymer (HPP1) being part of the heterophasic polypropylene composition (HECO).

Accordingly, one important requirement of the present invention is that the elastomeric propylene copolymer (EP1) has a rather high weight average molecular weight. High intrinsic viscosity (IV) values reflect a high weight average molecular weight. Thus, it is appreciated that the xylene cold soluble fraction (XCS) of the heterophasic propylene copolymer (HPP1) being part of the heterophasic polypropylene composition (HECO) has an intrinsic viscosity (IV) measured according to ISO 1628-1 (at 135 °C in decalin) of equal or higher than 2 dl/g, more preferably of equal or higher than 2.4 dl/g, i.e. 2.5 dl/g, still more preferably in the range of 2.4 to 5 dl/g, i.e. 2.5 to 5 dl/g, like in the range of 2.4 to 4, i.e. 2.5 to 4 dl/g.

The comonomer content, preferably the ethylene content, within the elastomeric propylene copolymer (EP1) is comparatively low. Accordingly, in a preferred embodiment the comonomer content, more preferably ethylene content, of the xylene cold soluble fraction (XCS) of the elastomeric propylene copolymer (EP1) being part of the heterophasic propylene copolymer (HPP1) is below 45 wt.-%, more preferably below 40 wt.-%, yet more preferably in the range of 25 to 45 wt.-%, like 30 to 40 wt.-%.

The heterophasic propylene copolymer (HPP2) being part of the heterophasic polypropylene composition (HECO) comprises apart from propylene also comonomers. Preferably, the heterophasic propylene copolymer (HPP2) being part of the heterophasic polypropylene composition (HECO) comprises apart from propylene ethylene and/or $C_4$ to $C_{12}$ $\alpha$-olefins. Accordingly, the term heterophasic propylene copolymer (HPP2) according to this invention is understood as a polypropylene comprising, preferably consisting of, units derivable from

(a) propylene
and
(b) ethylene and/or $C_4$ to $C_{12}$ $\alpha$-olefins.

Thus, the heterophasic propylene copolymer (HPP2) according to this invention, i.e. the heterophasic propylene copolymer (HPP2) being part of the heterophasic propylene copolymer (HECO), comprises monomers copolymerizable with propylene, for example comonomers such as ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably, the heterophasic propylene copolymer (HPP2) according to this invention comprises, especially consist of, monomers copolymerizable with propylene from the group consisting of ethylene, 1-butene and 1-hexene. More specifically, the heterophasic propylene copolymer (HPP2) of this invention comprises - apart from propylene - units derivable from ethylene and/or 1-butene. In a preferred embodiment, the heterophasic propylene copolymer (HPP2) according to this invention comprises units derivable from ethylene and propylene only. Still more preferably only the elastomeric propylene copolymer (EP2) contains ethylene comonomers.

The polypropylene matrix (PM2) is preferably a random polypropylene copolymer matrix (R-PPM2) or a polypropylene homopolymer matrix (H-MPP2), the latter being especially preferred.

Accordingly the comonomer content of the polypropylene matrix (PM2) is equal or below 3.0 wt.-%, yet more preferably not more than 2.0 wt.-%, still more preferably not more than 1.0 wt.-%, still yet more preferably not more than 0.5 wt.-%, like not more than 0.2 wt.-%.

As mentioned above the polypropylene matrix (PM2) is preferably a polypropylene homopolymer matrix (H-MPP2).

Concerning the definition of a homopolymer reference is made to the information provided above.

In case the polypropylene matrix (PM2) is a random polypropylene copolymer matrix (R-PPM2) it is appreciated that the a random polypropylene copolymer matrix (R-PPM2) comprises monomers copolymerizable with propylene, for example comonomers such as ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably the random polypropylene copolymer matrix (R-PPM2) according to this invention comprises, especially consists of, monomers copolymerizable with propylene from the group consisting of ethylene, 1-butene and 1-hexene. More specifically the random polypropylene copolymer matrix (R-PPM2) of this invention comprises - apart from propylene - units derivable from ethylene and/or 1-butene. In a preferred embodiment the random polypropylene copolymer matrix (R-PPM2) comprises units derivable from ethylene and propylene only.

Additionally it is appreciated that the random polypropylene copolymer matrix (R-PPM2) has preferably a comonomer content in the range of more than 0.5 to 3.0 wt.-%, more preferably in the range of more than 0.5 to 2.0 wt.-%, yet more preferably in the range of 0.5 to 1.0 wt.-%.

The elastomeric propylene copolymer (EP2) is preferably an ethylene propylene rubber (EPR), whereas the matrix in which the elastomeric propylene copolymer (EP2) is dispersed is a polypropylene homopolymer matrix (PM2).

It is appreciated that the heterophasic propylene copolymer (HPP2) being part of the heterophasic polypropylene composition (HECO) preferably has a comonomer content of between 5 and 20 wt.-%, preferably of between 5 and 18 wt.-% and most preferably of between 8 and 15 wt.-% based on the total weight of the heterophasic propylene copolymer (HPP2).

It is one specific requirement of the present invention that the heterophasic propylene copolymer (HPP2) has a xylene cold soluble (XCS) fraction measured according to ISO 16152 (25 °C) of between 10 and 35 wt.-%, based on the total weight of the heterophasic propylene copolymer (HPP2). Accordingly, the xylene cold soluble (XCS) fraction measured according to ISO 16152 (25 °C) of the heterophasic propylene copolymer (HPP2) being part of the heterophasic polypropylene composition (HECO) is preferably of between 10 and 35 wt.-%, preferably of between 14 and 30 wt.-% and most preferably of between 15 and 28 wt.-%, based on the total weight of the heterophasic propylene copolymer (HPP2) being part of the heterophasic polypropylene composition (HECO).

Additionally or alternatively, the heterophasic propylene copolymer (HPP2) being part of the heterophasic polypropylene composition (HECO) has a melt flow rate $MFR_2$ (230 °C) measured according to ISO 1133 of between

5 and 25 g/10min and preferably of between 5 and 20 g/10min. For example, the heterophasic propylene copolymer (HPP2) being part of the heterophasic polypropylene composition (HECO) has a melt flow rate $MFR_2$ (230 °C) measured according to ISO 1133 of between 8 and equal or below 15 g/10min.

Preferably the heterophasic propylene copolymer (HPP2) has

(a) a higher, preferably an at least of 3 wt.-% higher, more preferably an at least of 5 wt.-% higher, xylene cold soluble (XCS) fraction,
and/or
(b) a lower, preferably an at least of 5 g/10min lower, more preferably an at least of 8 g/10min lower, melt flow rate $MFR_2$ (230 °C),
than the heterophasic propylene copolymer (HPP1).

Additionally or alternatively, the heterophasic propylene copolymer (HPP2) being part of the heterophasic polypropylene composition (HECO) has a tensile strain at break measured according to ISO 527-2 of at least 150 % or of at least 180 %. For example, the heterophasic propylene copolymer (HPP2) being part of the heterophasic polypropylene composition (HECO) has a tensile strain at break measured according to ISO 527-2 between 200 and 400 %, more preferably between 200 and 300 %.

In one preferred embodiment of the present invention, the tensile strain at break for the heterophasic propylene copolymer (HPP2) differs from the tensile strain at break for the heterophasic propylene copolymer (HPP1) by a value of more than 100 %, more preferably by a value of more than 130 %, still more preferably by a value of more than 150 % and yet more preferably by a value of more than 180 %, wherein the difference is calculated by the formula

$$\text{TSaB [HPP2]} - \text{TSaB [HPP1]}$$

wherein

TSaB [HPP2] is the tensile strain at break value measured according to ISO 527-2 for the heterophasic propylene copolymer (HPP2), and
TSaB [HPP1] is the tensile strain at break value measured according to ISO 527-2 for the heterophasic propylene copolymer (HPP1).

In a preferred embodiment of the present invention, the heterophasic propylene copolymer (HPP2) being part of the heterophasic polypropylene composition (HECO) has a comonomer content of between 5 and 20 wt.-%, preferably of between 5 and 18 wt.-% and most preferably of between 8 and equal or below 15 wt.-%, based on the total weight of the heterophasic propylene copolymer (HPP2), a xylene cold soluble (XCS) fraction measured according to ISO 16152 (25 °C) of between 10 and 35 wt.-%, based on the total weight of the heterophasic propylene copolymer (HPP2) being part of the heterophasic polypropylene composition (HECO) and a melt flow rate $MFR_2$ (230 °C) measured according to ISO 1133 of between 5 and 25 g/10min.

In a further preferred embodiment of the present invention, the heterophasic propylene copolymer (HPP2) being part of the heterophasic polypropylene composition (HECO) has a comonomer content of between 5 and 20 wt.-%, preferably of between 5 and 18 wt.-% and most preferably of between 8 and equal or below 15 wt.-% based on the total weight of the heterophasic propylene copolymer (HPP2), a xylene cold soluble (XCS) fraction measured according to ISO 16152 (25 °C) of between 10 and 35 wt.-%, based on the total weight of the heterophasic propylene copolymer (HPP2) being part of the heterophasic polypropylene composition (HECO) and a melt flow rate $MFR_2$ (230 °C) measured according to ISO 1133 of between 5 and 20 g/10min.

In a further preferred embodiment of the present invention, the heterophasic propylene copolymer (HPP2) being part of the heterophasic polypropylene composition (HECO) has a comonomer content of between 5 and 20 wt.-%, preferably of between 5 and 18 wt.-% and most preferably of between 8 and equal or below 15 wt.-%, based on the total weight of the heterophasic propylene copolymer (HPP2), a xylene cold soluble (XCS) fraction measured according to ISO 16152 (25 °C) of between 10 and 35 wt.-%, based on the total weight of the heterophasic propylene copolymer (HPP2) being part of the heterophasic polypropylene composition (HECO) and a melt flow rate $MFR_2$ (230 °C) measured according to ISO 1133 of between 8 and 15 g/10min.

In another preferred embodiment of the present invention, the heterophasic propylene copolymer (HPP2) being part of the heterophasic polypropylene composition (HECO) has a comonomer content of between 5 and 20 wt.-%, preferably of between 5 and 18 wt.-% and most preferably of between 8 and equal or below 15 wt.-%, based on the total weight of the heterophasic propylene copolymer (HPP2), a xylene cold soluble (XCS) fraction measured according to

ISO 16152 (25 °C) of between 14 and 30 wt.-%, based on the total weight of the heterophasic propylene copolymer (HPP2) being part of the heterophasic polypropylene composition (HECO) and a melt flow rate $MFR_2$ (230 °C) measured according to ISO 1133 of between 5 and 25 g/10min.

In a further preferred embodiment of the present invention, the heterophasic propylene copolymer (HPP2) being part of the heterophasic polypropylene composition (HECO) has a comonomer content of between 5 and 20 wt.-%, preferably of between 5 and 18 wt.-% and most preferably of between 8 and equal or below 15 wt.-%, based on the total weight of the heterophasic propylene copolymer (HPP2), a xylene cold soluble (XCS) fraction measured according to ISO 16152 (25 °C) of between 14 and 30 wt.-%, based on the total weight of the heterophasic propylene copolymer (HPP2) being part of the heterophasic polypropylene composition (HECO) and a melt flow rate $MFR_2$ (230 °C) measured according to ISO 1133 of between 5 and 20 g/10min.

In another preferred embodiment of the present invention, the heterophasic propylene copolymer (HPP2) being part of the heterophasic polypropylene composition (HECO) has a comonomer content of between 5 and 20 wt.-%, preferably of between 5 and 18 wt.-% and most preferably of between 8 and equal or below 15 wt.-%, based on the total weight of the heterophasic propylene copolymer (HPP2), a xylene cold soluble (XCS) fraction measured according to ISO 16152 (25 °C) of between 14 and 30 wt.-%, based on the total weight of the heterophasic propylene copolymer (HPP2) being part of the heterophasic polypropylene composition (HECO) and a melt flow rate $MFR_2$ (230 °C) measured according to ISO 1133 of between 8 and 15 g/10min.

In another preferred embodiment of the present invention, the heterophasic propylene copolymer (HPP2) being part of the heterophasic polypropylene composition (HECO) has a comonomer content of between 5 and 20 wt.-%, preferably of between 5 and 18 wt.-% and most preferably of between 8 and equal or below 15 wt.-%, based on the total weight of the heterophasic propylene copolymer (HPP2), a xylene cold soluble (XCS) fraction measured according to ISO 16152 (25 °C) of between 15 and 28 wt.-%, based on the total weight of the heterophasic propylene copolymer (HPP2) being part of the heterophasic polypropylene composition (HECO) and a melt flow rate $MFR_2$ (230 °C) measured according to ISO 1133 of between 5 and 25 g/10min.

In a further preferred embodiment of the present invention, the heterophasic propylene copolymer (HPP2) being part of the heterophasic polypropylene composition (HECO) has a comonomer content of between 5 and 20 wt.-%, preferably of between 5 and 18 wt.-% and most preferably of between 8 and equal or below 15 wt.-%, based on the total weight of the heterophasic propylene copolymer (HPP2), a xylene cold soluble (XCS) fraction measured according to ISO 16152 (25 °C) of between 15 and 28 wt.-%, based on the total weight of the heterophasic propylene copolymer (HPP2) being part of the heterophasic polypropylene composition (HECO) and a melt flow rate $MFR_2$ (230 °C) measured according to ISO 1133 of between 5 and 20 g/10min.

In another preferred embodiment of the present invention, the heterophasic propylene copolymer (HPP2) being part of the heterophasic polypropylene composition (HECO) has a comonomer content of between 5 and 20 wt.-%, preferably of between 5 and 18 wt.-% and most preferably of between 8 and equal or below 15 wt.-%, based on the total weight of the heterophasic propylene copolymer (HPP2), a xylene cold soluble (XCS) fraction measured according to ISO 16152 (25 °C) of between 15 and 28 wt.-%, based on the total weight of the heterophasic propylene copolymer (HPP2) being part of the heterophasic polypropylene composition (HECO) and a melt flow rate $MFR_2$ (230 °C) measured according to ISO 1133 of between 8 and 15 g/10min.

The xylene cold soluble (XCS) fraction of the polypropylene matrix (PM2), preferably of the polypropylene homopolymer matrix (H-MPP2), being part of the heterophasic propylene copolymer (HPP2) is rather moderate. Accordingly, the xylene cold soluble (XCS) fraction of the polypropylene matrix (PM2), preferably of the polypropylene homopolymer matrix (H-MPP2), is preferably equal or below 5 wt.-%, more preferably equal or below 4.5 wt.-% and still more preferably in the range of 0.5 to 5 wt.-%. For example, the xylene cold soluble (XCS) fraction of the polypropylene matrix (PM2), preferably of the polypropylene homopolymer matrix (H-MPP2), is in the range of 0.5 to 4 wt.-%, preferably in the range of 1 to 4 wt.-%, more preferably in the range of 1 to 3 wt.-% and most preferably in the range of 1 to 2 wt.-%. The weight percentage is based on the total weight of the polypropylene matrix (PM2), preferably of the polypropylene homopolymer matrix (H-MPP2).

Furthermore, the polypropylene matrix (PM2), preferably the polypropylene homopolymer matrix (H-MPP2), being part of the heterophasic propylene copolymer (HPP2) has a rather moderate melt flow rate. Accordingly, it is preferred that the polypropylene matrix (PM2), preferably the polypropylene homopolymer matrix (H-MPP2), has a melt flow rate $MFR_2$ (230 °C) measured according to ISO 1133 in the range of 5 to 80 g/10min, preferably in the range of 10 to 60 g/10 min and most preferably in the range of 20 to 50 g/10 min.

In a preferred embodiment the melt flow rate $MFR_2$ (230 °C) of the polypropylene matrix (PM2) differs from the melt flow rate $MFR_2$ (230 °C) of the polypropylene matrix (PM1). More preferred the melt flow rate $MFR_2$ (230 °C) of the polypropylene matrix (PM1) is preferably at least 5 g/10min higher than the melt flow rate $MFR_2$ (230 °C) of the polypropylene matrix (PM2).

A further essential component of the heterophasic propylene copolymer (HPP2) being part of the heterophasic polypropylene composition (HECO) is the elastomeric propylene copolymer (EP2) dispersed in the polypropylene matrix

(PM2), preferably dispersed in the polypropylene homopolymer matrix (H-MPP2).

Concerning the comonomers used in the elastomeric propylene copolymer (EP2) it is referred to the information provided for the heterophasic propylene copolymer (HPP2). Accordingly, the elastomeric propylene copolymer (EP2) comprises monomers copolymerizable with propylene, for example comonomers such as ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably, the elastomeric propylene copolymer (EP2) comprises, especially consists of, monomers copolymerizable with propylene from the group consisting of ethylene, 1 -butene and 1 -hexene. More specifically, the elastomeric propylene copolymer (EP2) comprises - apart from propylene - units derivable from ethylene and/or 1-butene. Thus, in an especially preferred embodiment the elastomeric propylene copolymer (EP2) comprises units derivable from propylene and ethylene only.

It is thus appreciated that the elastomeric propylene copolymer (EP2) dispersed in the polypropylene matrix (PM2), preferably dispersed in the polypropylene homopolymer matrix (H-MPP2), comprises propylene monomer units and comonomer units selected from ethylene and/or $C_4$ to $C_{12}$ $\alpha$-olefin. For example, the elastomeric propylene copolymer (EP2) dispersed in the polypropylene matrix (PM2), preferably dispersed in the polypropylene homopolymer matrix (H-MPP2), comprises propylene monomer units and ethylene comonomer units.

In one preferred embodiment of the present invention, the heterophasic propylene copolymer (HPP2) being part of the heterophasic polypropylene composition (HECO) comprises the elastomeric propylene copolymer (EP2) in an amount of between of 10 to 35 wt.-%, more preferably in an amount of between of 14 to 30 wt.-% and most preferably in an amount of between of 15 to 28 wt.-%, based on the total amount of the heterophasic propylene copolymer (HPP2) comprising the polypropylene matrix (PM2) and the elastomeric propylene copolymer (EP2).

The properties of the elastomeric propylene copolymer (EP2) mainly influences the xylene cold soluble (XCS) fraction of the polypropylene matrix (PM2), preferably of the polypropylene homopolymer matrix (H-MPP2), being part of the heterophasic polypropylene composition (HECO). Thus, according to the present invention, the xylene cold soluble fraction of the heterophasic propylene copolymer (HPP2) being part of the heterophasic polypropylene composition (HECO) is regarded as the elastomeric propylene copolymer (EP2) of the heterophasic propylene copolymer (HPP2) being part of the heterophasic polypropylene composition (HECO).

Accordingly, one important requirement of the present invention is that the elastomeric propylene copolymer (EP2) has a rather high weight average molecular weight. High intrinsic viscosity (IV) values reflect a high weight average molecular weight. Thus, it is appreciated that the xylene cold soluble fraction (XCS) of the heterophasic propylene copolymer (HPP2) being part of the heterophasic polypropylene composition (HECO) has an intrinsic viscosity (IV) measured according to ISO 1628-1 (at 135 °C in decalin) of equal or higher than 2 dl/g, more preferably of equal or higher than 2.4 dl/g, i.e. 2.5 dl/g, still more preferably in the range of 2.4 to 5 dl/g, i.e. 2.5 to 5 dl/g, like in the range of 2.4 to 4, i.e. 2.5 to 4 dl/g.

The comonomer content, preferably the ethylene content, within the elastomeric propylene copolymer (EP2) is comparatively low. Accordingly, in a preferred embodiment, the comonomer content, more preferably ethylene content, of the xylene cold soluble (XCS) fraction of the elastomeric propylene copolymer (EP2) being part of the heterophasic propylene copolymer (HPP2) is below 45 wt.-%, more preferably below 40 wt.-%, yet more preferably in the range of 25 to 45 wt.-%, like 30 to 40 wt.-%.

The heterophasic propylene copolymer (HPP1) and/or heterophasic propylene copolymer (HPP2) being part of the heterophasic polypropylene composition (HECO) as defined in the instant invention may each comprise up to 5 wt.-%, like not more than 3.5 wt.-%, based on the total weight of the respective heterophasic propylene copolymer (HPP1) and/or heterophasic propylene copolymer (HPP2), of additives, like nucleating agents (NA), acid scavengers (AS) and antioxidants, as well as slip agents, inorganic filler (F) and UV light stabilizer.

Accordingly, also the heterophasic polypropylene composition (HECO) as defined in the instant invention may comprise up to 5 wt.-%, like not more than 3.5 wt.-%, based on the total weight of the heterophasic polypropylene composition (HECO), of additives, like nucleating agents (NA), acid scavengers (AS) and antioxidants, as well as slip agents, inorganic filler (F) and UV light stabilizer.

Preferably, the inorganic filler (F) is selected from the group consisting of mica, wollastonite, kaolinite, smectite, montmorillonite and talc. The most preferred inorganic filler (F) is talc.

A preferred acid scavenger (AS) is Ca-stearate.

As antioxidants (AO) preferably phenolic antioxidant and/or phosphorous antioxidant are be present in the inventive composition.

More preferably the phenolic antioxidant is selected from the group consisting of pentaerythrityl-tetrakis (3-(3,5-di-tert-butyl-4-hydroxyphenyl) propionate (CAS no. 6683-19-8; 1178 g/mol), octadecyl 3-(3',5'-di-tert-butyl-4-hydroxyphenyl)propionate (CAS no. 2082-79-3; 531 g/mol) bis(3,3-bis(3'-tert-butyl-4'-hydroxyphenyl)butanic acid) glycolester (CAS no. 32509-66-3; 794 g/mol), 3,3'-Bis(3,5-di-tert-butyl-4-hydroxyphenyl)-N,N'-hexamethylenedipropionamide (CAS no. 23128-74-7; 637 g/mol), 3,9-bis(1,1-dimethyl-2-(beta-(3-tert-butyl-4-hydroxy-5-methylphenyl)propionyloxy)ethyl)-2,4,8,10-tetraoxaspiro[5.5]undecane (CAS no. 90498-90-1; 741 g/mol), 1,6-hexanediyl-bis(3,5-bis(1,1dimethylethyl)-4-hydroxybenzene)propanoate) (CAS no. 35074-77-2; 639 g/mol), triethylenglycol-bis-(3-tert-butyl-4-hydroxy-5-methylphenyl) propionate (CAS no. 36443-68-2; 587 g/mol), a mixture of C13 to C15 linear and branched alkyl esters of 3-(3',5'-di-t-butyl-4'-hydroxyphenyl) propionic acid (CAS no. 171090-93-0; 485 g/mol), and benzenepropanoic acid, 3,5-bis(1,1-dimehtyl-ethyl)-4-hydroxy-,C7-C9-branched and linear alkyl esters (CAS no. 125643-61-0; 399 g/mol),

The most preferred phenolic antioxidant is pentaerythrityl-tetrakis (3-(3,5-di-tert-butyl-4-hydroxyphenyl) propionate (CAS no. 6683-19-8; 1178 g/mol).

The preferred phosphorous antioxidant is selected from the group consisting of tris-(2,4-di-tert-butylphenyl) phosphite (CAS no. 31570-04-4; 647 g/mol), tetrakis-(2,4-di-tert-butylphenyl)-4,4'-biphenylen-di-phosphonite (CAS no. 38613-77-3; 991 g/mol), bis-(2,4-di-tert-butylphenyl)-pentaerythrityl-di-phosphite (CAS no. 26741-53-7; 604 g/mol), di-stearyl- pentaerythrityl-di-phosphite (CAS no. 3806-34-6; $M_w$ 733 g/mol), tris-nonylphenyl phosphite (CAS no. 26523-78-4; 689 g/mol), bis(2,6-di-tert-butyl-4-methylphenyl)pentaerythrityl-di-phosphite (CAS no. 80693-00-1; 633 g/mol), 2,2'-methylenebis (4,6-di-tert-butylphenyl) octyl-phosphite (CAS no. 126050-54-2; 583 g/mol), 1,1,3-tris (2-methyl-4-ditridecyl phosphite-5-tert-butylphenyl) butane (CAS no. 68958-97-4; 1831 g/mol), 4,4'-butylidenebis (3-methyl-6-tert-butylphenyl-di-tridecyl) phosphite (CAS no. 13003-12-8; 1240 g/mol), bis-(2,4-dicumylphenyl)pentaerythritol diposphite (CAS no. 154862-43-8; 852 g/mol), bis(2-methyl-4,6-bis(1,1-dmethylethyl) phenyl) phosphorous acid ethylester (CAS no. 145650-60-8; 514 g/mol), 2,2',2"-nitrilo triethyl-tris(3,3',5,5'-tetra-tert-butyl-1,1'-bipheny1-2,2'-diyl)phosphite) (CAS no. 80410-33-9; 1465 g/mol) 2,4,6-Tris(tert-butyl)phenyl-2-butyl-2-ethyl-1,3-propandiolphosphit (CAS no. 161717-32-4, 450 g/mol), 2,2'-Ethyliden-bis(4,6-di-tert-butylphenyl)fluorphosphonit (CAS no. 118337-09-0; 487 g/mol), 6-(3-(3-tert-butyl-4-hydroxy-5-methylphenyl)propoxy)-2,4,8,10-tetra-tert-butyldibenz[d,f][1.3.2]dioxaphosphepin (CAS no. 203255-81-6; 660 g/mol), tetrakis-(2,4-di-tert-butyl-5-methylphenyl)-4,4'-biphenylen-di-phosphite (CAS no. 147192-62-9; 1092 g/mol), and 1,3-bis-(diphenylphosphino)-2,2-dimethylpropane (CAS no. 80326-98-3; 440.5 g/mol).

The most preferred phosphorous antioxidant is tris-(2,4-di-tert-butylphenyl) phosphite (CAS no. 31570-04-4; 647 g/mol).

In one preferred embodiment of the present invention, the heterophasic polypropylene composition (HECO) and/or heterophasic propylene copolymer (HPP1) and/or heterophasic propylene copolymer (HPP2) comprises/comprise at least one UV light stabilizer, preferably at least one hindered amine light stabilizer, in order to improve the weathering resistance of the final article. Such hindered amine light stabilizers (HALS) are known in the art. For example, the heterophasic polypropylene composition (HECO) comprises the at least one UV stabilizer in an amount of between 0.1 and 0.5 wt.-% and preferably in an amount of between 0.1 and 0.3 wt.-%, based on the total weight of the heterophasic polypropylene composition (HECO).

Preferably such hindered amine light stabilizers are 2,6-alkyl-piperidine derivatives in particular 2,2,6,6-tetramethyl-piperidine derivatives.

Accordingly the hindered amine light stabilizer is preferably selected from the group consisting of bis-(2,2,6,6-tetramethyl-4-piperidyl) sebacate (CAS no. 52829-07-9; 481 g/mol), bis-(1,2,2,6,6-pentamethyl-4-piperidyl) sebacate (CAS no. 41556-26-7; 509 g/mol), tetrakis (2,2,6,6-tetramethyl-4-piperidyl)-1,2,3,4-butane tetracarboxylate (CAS no. 64022-61-3; 792 g/mol), tetrakis (1,2,2,6,6-pentamethyl-4-piperidyl)-1,2,3,4-butane tetracarboxylate (CAS no. 91788-83-9; 847 g/mol), 1,2,3-tris (1,2,2,6,6-pentamethyl-4-piperidyl)-4-tridecyl butane-1,2,3,4-tetracarboxylate (CAS no. 84696-72-0; 900 g/mol), 1,2,3-tris (2,2,6,6-tetramethyl-4-piperidyl)-4-tridecyl butane-1,2,3,4-tetracarboxylate (CAS no. 84696-71-9; 900 g/mol), N,N'-bisformyl-N,N'-bis-(2,2,6,6-tetramethyl-4-piperidinyl)-hexamethylendiamine (CAS no. 124172-53-8; 450 g/mol), poly((6-((1,1,3,3-tetramethylbutyl)amino)-1,3,5-triazine-2,4-diyl)(2,2,6,6-tetramethyl-4-piperidyl)imino)-1,6-hexanediyl ((2,2,6,6-tetramethyl-4-piperidyl)imino)) (CAS no. 71878-19-8), 1,3,5-triazine-2,4,6-triamine, $N_5$N"'-1,2-ethanediylbis[N-[3-[[4,6-bis[butyl(1,2,2,6,6-pentamethyl-4-piperidinyl)amino]-1,3,5-triazin-2-yl]amino]propyl]-N',N"-dibutyl-N',N"-bis(1,2,2,6,6-pentamethyl-4-piperidinyl)- (CAS no. 106990-43-6; 2286 g/mol), and bis-(1-octyloxy-2,2,6,6-tetramethyl-4-piperidinyl) sebacate (CAS no. 129757-67-1; 737 g/mol).

In one preferred embodiment the hindered amine light stabilizers are selected from the group consisting of Cyasorb 3808 (a mixture of *n*-Hexadecyl-3,5-di-*t*-butyl-4-hydroxybenzoate and of esters of 2,2,6,6-tetramethyl-4-piperidinol and higher fatty acids (mainly stearic acid, supplier Cytec)), Sabostab UV94 [poly((6-((1,1,3,3-tetramethylbutyl)amino)-1,3,5-triazine-2,4-diyl)(2,2,6,6-tetramethyl-4- piperidyl)imino)-1,6-hexanediyl ((2,2,6,6-tetramethyl-4-piperidyl)imino), CAS-no. 71878-19-8, supplier BASF) Chimassorb 944 [poly((6-((1,1,3,3-tetramethylbutyl)amino)-1,3,5-triazine-2,4-diyl)(2,2,6,6-tetramethyl-4-piperidyl)imino)-1,6-hexanediyl ((2,2,6,6-tetramethyl-4-piperidyl)imino), CAS-no. 71878-19-8, supplier BASF), and mixtures thereof, more preferably the hindered amine light stabilizers are Sabostab UV94 and/or Chimassorb 944.

In case a nucleating agent (NA) is used it is preferably an $\alpha$-nucleating agent. Even more preferred the present invention is free of $\beta$-nucleating agents. According to the present invention the nucleating agent (NA) is understood as a nucleating agent different to the inorganic filler (F). Accordingly, the nucleating agent (NA) is preferably selected from the group consisting of

(i) salts of monocarboxylic acids and polycarboxylic acids, e.g. sodium benzoate or aluminum tert-butylbenzoate, and
(ii) dibenzylidenesorbitol (e.g. 1,3 : 2,4 dibenzylidenesorbitol) and $C_1$-$C_8$-alkylsubstituted dibenzylidenesorbitol de-

rivatives, such as methyldibenzylidenesorbitol, ethyldibenzylidenesorbitol or dimethyldibenzylidenesorbitol (e.g. 1,3 : 2,4 di(methylbenzylidene) sorbitol), or substituted nonitol-derivatives, such as 1,2,3,-trideoxy-4,6:5,7-bis-O-[(4-propylphenyl)methylene]-nonitol, and
(iii) salts of diesters of phosphoric acid, e.g. sodium 2,2'-methylenebis (4, 6,-di-tert-butylphenyl) phosphate or aluminium-hydroxy-bis[2,2'-methylene-bis(4,6-di-t-butylphenyl)phosphate], and
(iv) vinylcycloalkane polymer and vinylalkane polymer (as discussed above), and
(v) mixtures thereof.

Such additives are generally commercially available and are described, for example, in "Plastic Additives Handbook", 5th edition, 2001 of Hans Zweifel.

Most preferably the α-nucleating agent (NA) is part of the heterophasic propylene copolymer (HPP1) and/or the heterophasic propylene copolymer (HPP2) (and thus of the heterophasic polypropylene composition (HECO)). Accordingly the α-nucleating agent content of the heterophasic propylene copolymer (HPP1) and/or the heterophasic propylene copolymer (HPP2) (and thus of the heterophasic polypropylene composition (HECO)) is preferably up to 5.0 wt.-%. In a preferred embodiment, the heterophasic propylene copolymer (HPP1) and/or the heterophasic propylene copolymer (HPP2) (and thus the heterophasic polypropylene composition (HECO)) contain(s) not more than 3000 ppm, more preferably of 1 to 2000 ppm of a α-nucleating agent, in particular selected from the group consisting of dibenzylidenesorbitol (e.g. 1,3 : 2,4 dibenzylidene sorbitol), dibenzylidenesorbitol derivative, preferably dimethyldibenzylidenesorbitol (e.g. 1,3 : 2,4 di(methylbenzylidene) sorbitol), or substituted nonitol-derivatives, such as 1,2,3,-trideoxy-4,6:5,7-bis-O-[(4-propylphenyl)methylene]-nonitol, vinylcycloalkane polymer, vinylalkane polymer, and mixtures thereof.

In a preferred embodiment the heterophasic propylene copolymer (HPP1) and/or the heterophasic propylene copolymer (HPP2) (and thus the heterophasic polypropylene composition (HECO)) contains a vinylcycloalkane, like vinylcyclohexane (VCH), polymer and/or vinylalkane polymer, as the α-nucleating agent. Preferably in this c embodiment the heterophasic propylene copolymer (HPP1) and the heterophasic propylene copolymer (HPP2) contains a vinylcycloalkane, like vinylcyclohexane (VCH), polymer and/or vinylalkane polymer, preferably vinylcyclohexane (VCH). Preferably the vinylcycloalkane is vinylcyclohexane (VCH) polymer which is introduced into the heterophasic propylene copolymer (HPP1) and/or the heterophasic propylene copolymer (HPP2) (and thus into the heterophasic polypropylene composition (HECO)) by the BNT technology.
More preferably in this preferred embodiment, the amount of vinylcycloalkane, like vinylcyclohexane (VCH), polymer and/or vinylalkane polymer, more preferably of vinylcyclohexane (VCH) polymer, in the heterophasic propylene copolymer (HPP1) is not more than 500 ppm, more preferably of 1 to 200 ppm, most preferably 5 to 100 ppm, and the amount of vinylcycloalkane, like vinylcyclohexane (VCH), polymer and/or vinylalkane polymer, more preferably of vinylcyclohexane (VCH) polymer, in the heterophasic propylene copolymer (HPP2) is not more than 500 ppm, more preferably of 1 to 200 ppm, most preferably 5 to 100 ppm. Accordingly it is thus preferred that the heterophasic polypropylene composition (HECO) contains not more than 500 ppm, more preferably of 1 to 200 ppm, most preferably 5 to 100 ppm.

With regard to the BNT-technology reference is made to the international applications WO 99/24478, WO 99/24479 and particularly WO 00/68315. According to this technology a catalyst system, preferably a Ziegler-Natta procatalyst, can be modified by polymerising a vinyl compound in the presence of the catalyst system, comprising in particular the special Ziegler-Natta procatalyst, an external donor and a cocatalyst, which vinyl compound has the formula:

$$CH_2=CH-CHR^3R^4$$

wherein $R^3$ and $R^4$ together form a 5- or 6-membered saturated, unsaturated or aromatic ring or independently represent an alkyl group comprising 1 to 4 carbon atoms, and the modified catalyst is used for the preparation of the heterophasic polypropylene composition according to this invention, i.e. of the heterophasic propylene copolymer (HPP1) and/or the heterophasic propylene copolymer (HPP2), most preferably of the heterophasic propylene copolymer (HPP1) and the heterophasic propylene copolymer (HPP2). The polymerized vinyl compound acts as an α-nucleating agent. The weight ratio of vinyl compound to solid catalyst component in the modification step of the catalyst is preferably of up to 5 (5:1), preferably up to 3 (3:1) most preferably from 0.5 (1:2) to 2 (2:1). The most preferred vinyl compound is vinylcyclohexane (VCH).

A preferred slip agent is for instance a fatty acid amide. Preferably the amount of carbon atoms of the fatty acid is preferably in the range of $C_{10}$ to $C_{25}$ carbon atoms.

Especially suitable is cis-13-docosenoic amide (CAS no. 112-84-5; 337.6 g/mol) and/or cis-9-octadecenamide (CAS no. 301-02-0; 281.5 g/mol).

According to another aspect of the present invention, the heterophasic polypropylene composition (HECO) is prepared by blending the heterophasic propylene copolymer (HPP1) with the heterophasic propylene copolymer (HPP2) and optional additives in an extruder, and extruding the obtained blend of the heterophasic propylene copolymer (HPP1), the heterophasic propylene copolymer (HPP2) and optional additives in the extruder. The term "blending" refers according

to the present invention to the action of providing a blend out of at least two different, pre-existing materials, i.e. the heterophasic propylene copolymer (HPP1), the heterophasic propylene copolymer (HPP2) and optional additives.

For blending the individual components of the instant composition, i.e. the heterophasic propylene copolymer (HPP1) with the heterophasic propylene copolymer (HPP2) and optional additives, a conventional compounding or blending apparatus, e.g. a Banbury mixer, a 2-roll rubber mill, Buss-co-kneader or a twin screw extruder may be used. The polymer materials recovered from the extruder are usually in the form of pellets. These pellets are then preferably further processed, e.g. by injection moulding to generate articles and products of the inventive composition.

All components used for the preparation of the instant heterophasic polypropylene composition (HECO) are known. Accordingly, also their preparation is well known. For instance, the heterophasic propylene copolymer (HPP1) and the heterophasic propylene copolymer (HPP2) according to this invention are preferably produced independently from each other in a sequential polymerization process, i.e. in a multistage process known in the art, wherein the corresponding matrices (polypropylene homopolymer matrix (PM1) and polypropylene homopolymer matrix (PM2)) are produced independently from each other at least in one slurry reactor and subsequently the elastomeric copolymers (elastomeric propylene copolymer (EP1) and elastomeric propylene copolymer (EP2)) are produced independently from each other at least in one i.e. one or two, gas phase reactor(s).

More precisely, the heterophasic propylene copolymer (HPP1) is obtained by producing the polypropylene homopolymer matrix (PM1) in at least one reactor system, said system comprises at least one reactor, transferring said polypropylene homopolymer matrix (PM1) in a subsequent reactor system, said system comprises at least one reactor, where in the presence of the polypropylene homopolymer matrix (PM1) the elastomeric propylene copolymer (EP1) is produced.

Additionally or alternatively, the heterophasic propylene copolymer (HPP2) is obtained by producing the polypropylene matrix (PM2) in at least one reactor system, said system comprises at least one reactor, transferring said polypropylene matrix (PM2) in a subsequent reactor system, said system comprises at least one reactor, where in the presence of the polypropylene matrix (PM2) the elastomeric propylene copolymer (EP2) is produced.

Thus, each of the polymerization systems can comprise one or more conventional stirred slurry reactors and/or one or more gas phase reactors. Preferably the reactors used are selected from the group of loop and gas phase reactors and, in particular, the process employs at least one loop reactor and at least one gas phase reactor. It is also possible to use several reactors of each type, e.g. one loop and two or three gas phase reactors, or two loops and one or two gas phase reactors, in series.

The term "sequential polymerization process" indicates that the heterophasic propylene copolymer (HPP1) and the heterophasic propylene copolymer (HPP2), respectively, is prepared in at least two, like three or four polymerization reactors connected in series. Accordingly, the present process comprises for each heterophasic propylene copolymer (HPP1) and the heterophasic propylene copolymer (HPP2), respectively, at least a first reactor (R1) and a second reactor (R2), more preferably a first reactor (R1), a second reactor (R2), a third reactor (R3) and a fourth reactor (R4). The term "polymerization reactor" shall indicate that the main polymerization takes place. Thus, in case the process consists of four polymerization reactors, this definition does not exclude the option that the overall process comprises for instance a pre-polymerization step in a pre-polymerization reactor. The term "consist of" is only a closing formulation in view of the main polymerization reactors.

Preferably, the process for the preparation of the heterophasic propylene copolymer (HPP1) and/or the heterophasic propylene copolymer (HPP2) comprises also a prepolymerisation with the chosen catalyst system, as described in detail below, comprising the Ziegler-Natta procatalyst, the external donor and the cocatalyst.

In a preferred embodiment, the prepolymerisation is conducted as bulk slurry polymerization in liquid propylene, i.e. the liquid phase mainly comprises propylene, with minor amount of other reactants and optionally inert components dissolved therein.

The prepolymerisation reaction is typically conducted at a temperature of 0 to 50 °C, preferably from 10 to 45 °C, and more preferably from 15 to 40 °C.

The pressure in the prepolymerisation reactor is not critical but must be sufficiently high to maintain the reaction mixture in liquid phase. Thus, the pressure may be from 20 to 100 bar, for example 30 to 70 bar.

The catalyst components are preferably all introduced to the prepolymerisation step. However, where the solid catalyst component (i) and the cocatalyst (ii) can be fed separately it is possible that only a part of the cocatalyst is introduced into the prepolymerisation stage and the remaining part into subsequent polymerisation stages. Also in such cases it is necessary to introduce so much cocatalyst into the prepolymerisation stage that a sufficient polymerisation reaction is obtained therein.

It is possible to add other components also to the prepolymerisation stage. Thus, hydrogen may be added into the prepolymerisation stage to control the molecular weight of the prepolymer as is known in the art. Further, antistatic additive may be used to prevent the particles from adhering to each other or to the walls of the reactor.

The precise control of the prepolymerisation conditions and reaction parameters is within the skill of the art.

A slurry reactor designates any reactor, such as a continuous or simple batch stirred tank reactor or loop reactor,

operating in bulk or slurry and in which the polymer forms in particulate form. "Bulk" means a polymerization in reaction medium that comprises at least 60 wt.-% monomer. According to a preferred embodiment the slurry reactor comprises a bulk loop reactor.

"Gas phase reactor" means any mechanically mixed or fluid bed reactor. Preferably the gas phase reactor comprises a mechanically agitated fluid bed reactor with gas velocities of at least 0.2 m/sec.

The particularly preferred embodiment for the preparation of the heterophasic propylene copolymer (HPP1) and/or heterophasic propylene copolymer (HPP2) of the invention comprises carrying out the polymerization in a process comprising either a combination of one loop and one or two gas phase reactors or a combination of two loops and one or two gas phase reactors.

A preferred multistage process is a slurry-gas phase process, such as developed by Borealis and known as the Borstar® technology. In this respect, reference is made to EP 0 887 379 A1, WO 92/12182, WO 2004/000899, WO 2004/111095, WO 99/24478, WO 99/24479 and WO 00/68315.

Preferably, the heterophasic propylene copolymer (HPP1) and/or heterophasic propylene copolymer (HPP2) according to this invention are produced by using a special Ziegler-Natta procatalyst in combination with a special external donor, as described below in detail, preferably in the Borstar®-PP process.

One preferred multistage process may therefore comprise the steps of:

- producing a polypropylene matrix in the presence of the chosen catalyst system, as for instance described in detail below, comprising the special Ziegler-Natta procatalyst (i), an external donor (iii) and the cocatalyst (ii) in a first slurry reactor and optionally in a second slurry reactor, both slurry reactors using the same polymerization conditions,

  - transferring the slurry reactor product into at least one first gas phase reactor, like one gas phase reactor or a first and a second gas phase reactor connected in series,
  - producing an elastomeric copolymer in the presence of the polypropylene matrix and in the presence of the catalyst system in said at least first gas phase reactor,
  - recovering the polymer product for further processing.

With respect to the above-mentioned preferred slurry-gas phase process, the following general information can be provided with respect to the process conditions.

The temperature is preferably from 40 to 110 °C, preferably between 50 and 100 °C, in particular between 60 and 90 °C, with a pressure in the range of from 20 to 80 bar, preferably 30 to 60 bar, with the option of adding hydrogen in order to control the molecular weight in a manner known per se.

The reaction product of the slurry polymerization, which preferably is carried out in a loop reactor, is then transferred to the subsequent gas phase reactor(s), wherein the temperature preferably is within the range of from 50 to 130 °C, more preferably 60 to 100 °C, at a pressure in the range of from 5 to 50 bar, preferably 8 to 35 bar, again with the option of adding hydrogen in order to control the molecular weight in a manner known per se.

The average residence time can vary in the reactor zones identified above. In one embodiment, the average residence time in the slurry reactor, for example a loop reactor, is in the range of from 0.5 to 5 hours, for example 0.5 to 2 hours, while the average residence time in the gas phase reactor generally will be from 1 to 8 hours.

If desired, the polymerization may be effected in a known manner under supercritical conditions in the slurry, preferably loop reactor, and/or as a condensed mode in the gas phase reactor.

According to the invention the heterophasic polypropylenes are preferably obtained by a multistage polymerization process, as described above, in the presence of a catalyst system comprising as component (i) a Ziegler-Natta procatalyst which contains a trans-esterification product of a lower alcohol and a phthalic ester.

The procatalyst used according to the invention is prepared by

a) reacting a spray crystallized or emulsion solidified adduct of $MgCl_2$ and a $C_1$-$C_2$ alcohol with $TiCl_4$

b) reacting the product of stage a) with a dialkylphthalate of formula (I)

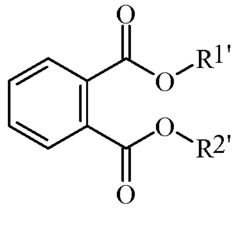

(I)

wherein $R^{1'}$ and $R^{2'}$ are independently at least a $C_5$ alkyl under conditions where a transesterification between said

$C_1$ to $C_2$ alcohol and said dialkylphthalate of formula (I) takes place to form the internal donor
c) washing the product of stage b) or
d) optionally reacting the product of step c) with additional $TiCl_4$.

The procatalyst is produced as defined for example in the patent applications WO 87/07620, WO 92/19653, WO 92/19658 and EP 0 491 566.

First an adduct of $MgCl_2$ and a $C_1$-$C_2$ alcohol of the formula $MgCl_2$*nROH, wherein R is methyl or ethyl and n is 1 to 6, is formed. Ethanol is preferably used as alcohol.

The adduct, which is first melted and then spray crystallized or emulsion solidified, is used as catalyst carrier.

In the next step the spray crystallized or emulsion solidified adduct of the formula $MgCl_2$*nROH, wherein R is methyl or ethyl, preferably ethyl and n is 1 to 6, is contacting with $TiCl_4$ to form a titanised carrier, followed by the steps of

- adding to said titanised carrier

  (i) a dialkylphthalate of formula (I) with $R^{1'}$ and $R^{2'}$ being independently at least a $C_5$-alkyl, like at least a $C_8$-alkyl, or preferably
  (ii) a dialkylphthalate of formula (I) with $R^{1'}$ and $R^{2'}$ being the same and being at least a $C_5$-alkyl, like at least a $C_8$-alkyl,
  or more preferably
  (iii) a dialkylphthalate of formula (I) selected from the group consisting of propylhexylphthalate (PrHP), dioctylphthalate (DOP), di-iso-decylphthalate (DIDP), and ditridecylphthalate (DTDP), yet more preferably the dialkylphthalate of formula (I) is a dioctylphthalate (DOP), like di-iso-octylphthalate or diethylhexylphthalate, in particular diethylhexylphthalate,
  to form a first product,

- subjecting said first product to suitable transesterification conditions, i.e. to a temperature above 100 °C, preferably between 100 to 150 °C, more preferably between 130 to 150 °C, such that said methanol or ethanol is transesterified with said ester groups of said dialkylphthalate of formula (I) to form preferably at least 80 mol-%, more preferably 90 mol-%, most preferably 95 mol.-%, of a dialkylphthalate of formula (II)

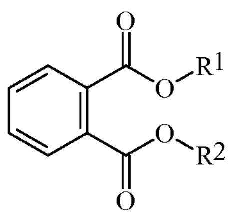

(II)

  with $R^1$ and $R^2$ being methyl or ethyl, preferably ethyl, the dialkylphthalat of formula (II) being the internal donor and
- recovering said transesterification product as the procatalyst composition (component (i)).

The adduct of the formula $MgCl_2$*nROH, wherein R is methyl or ethyl and n is 1 to 6, is in a preferred embodiment melted and then the melt is preferably injected by a gas into a cooled solvent or a cooled gas, whereby the adduct is crystallized into a morphologically advantageous form, as for example described in WO 87/07620.

This crystallized adduct is preferably used as the catalyst carrier and reacted to the procatalyst useful in the present invention as described in WO 92/19658 and WO 92/19653.

As the catalyst residue is removed by extracting, an adduct of the titanised carrier and the internal donor is obtained, in which the group deriving from the ester alcohol has changed.

In case sufficient titanium remains on the carrier, it will act as an active element of the procatalyst.

Otherwise the titanization is repeated after the above treatment in order to ensure a sufficient titanium concentration and thus activity.

Preferably the procatalyst used according to the invention contains 2.5 wt.-% of titanium at the most, preferably 2.2% wt.-% at the most and more preferably 2.0 wt.-% at the most. Its donor content is preferably between 4 to 12 wt.-% and more preferably between 6 and 10 wt.-%.

More preferably the procatalyst used according to the invention has been produced by using ethanol as the alcohol and dioctylphthalate (DOP) as dialkylphthalate of formula (I), yielding diethyl phthalate (DEP) as the internal donor compound.

Still more preferably the catalyst used according to the invention is the BC-1 catalyst of Borealis (prepared

according to WO 92/19653 as disclosed in WO 99/24479; especially with the use of dioctylphthalate as dialkylphthalate of formula (I) according to WO 92/19658) or the catalyst Polytrack 8502, commercially available from Grace.

For the production of the heterophasic polypropylenes according to the invention the catalyst system used preferably comprises in addition to the special Ziegler-Natta procatalyst an organometallic cocatalyst as component (ii).

Accordingly it is preferred to select the cocatalyst from the group consisting of trialkylaluminium, like triethylaluminium (TEA), dialkyl aluminium chloride and alkyl aluminium sesquichloride.

Component (iii) of the catalysts system used is an external donor represented by formula (IIIa) or (IIIb). Formula (IIIa) is defined by

$$Si(OCH_3)_2R_2^5 \qquad (IIIa)$$

wherein $R^5$ represents a branched-alkyl group having 3 to 12 carbon atoms, preferably a branched-alkyl group having 3 to 6 carbon atoms, or a cyclo-alkyl having 4 to 12 carbon atoms, preferably a cyclo-alkyl having 5 to 8 carbon atoms.

It is in particular preferred that $R^5$ is selected from the group consisting of iso-propyl, iso-butyl, iso-pentyl, tert.-butyl, tert.-amyl, neopentyl, cyclopentyl, cyclohexyl, methylcyclopentyl and cycloheptyl.

Formula (IIIb) is defined by

$$Si(OCH_2CH_3)_3(NR^xR^y) \qquad (IIIb)$$

wherein $R^x$ and $R^y$ can be the same or different a represent a hydrocarbon group having 1 to 12 carbon atoms.

$R^x$ and $R^y$ are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that $R^x$ and $R^y$ are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl.

More preferably both $R^x$ and $R^y$ are the same, yet more preferably both $R^x$ and $R^y$ are an ethyl group.

More preferably the external donor is selected from the group consisting of diethylaminotriethoxysilane $[Si(OCH_2CH_3)_3(N(CH_2CH_3)_2)]$, dicyclopentyl dimethoxy silane $[Si(OCH_3)_2(cyclo\text{-}pentyl)_2]$, diisopropyl dimethoxy silane $[Si(OCH_3)_2(CH(CH_3)_2)_2]$ and mixtures thereof. Most preferably the external donor is dicyclopentyl dimethoxy silane $[Si(OCH_3)_2(cyclo\text{-}pentyl)_2]$.

As mentioned above if desired, and most preferably, the Ziegler-Natta procatalyst is modified by polymerizing a vinyl compound in the presence of the catalyst system, comprising the special Ziegler-Natta procatalyst (component (i)), the external donor (component (iii)) and optionally the cocatalyst (component (ii)), wherein the vinyl compound has the formula:

$$CH_2{=}CH\text{-}CHR^3R^4$$

wherein $R^3$ and $R^4$ together form a 5- or 6-membered saturated, unsaturated or aromatic ring or independently represent an alkyl group comprising 1 to 4 carbon atoms. The weight ratio of vinyl compound to the solid catalyst component in the modification step of the catalyst is preferably of up to 5 (5:1), preferably up to 3 (3:1) most preferably from 0.5 (1:2) to 2 (2:1). The most preferred vinyl compound is vinylcyclohexane (VCH).

The so modified catalyst is used for the preparation of the heterophasic propylene copolymer (HPP1) and/or of heterophasic propylene copolymer (HPP2) to accomplish $\alpha$-nucleation of said polymers (BNT-technology).

Concerning the modification of catalyst reference is made to the international applications WO 99/24478, WO 99/24479 and particularly WO 00/68315, with respect to the reaction conditions concerning the modification of the catalyst as well as with respect to the polymerization reaction.

For mixing the individual components of the instant composition, a conventional compounding or blending apparatus, e.g. a Banbury mixer, a 2-roll rubber mill, Buss-co-kneader or a twin screw extruder may be used. The polymer materials recovered from the extruder are most preferably in the form of pellets. These pellets are then preferably further processed, e.g. by injection moulding to generate articles and products of the inventive composition.

The heterophasic polypropylene composition (HECO) of the present invention is preferably used for the production of articles. Accordingly, the present invention refers in a further aspect to an article comprising the instant heterophasic polypropylene composition (HECO). Preferably, the heterophasic polypropylene composition (HECO) of the present invention is used for the production of articles like molded articles, like injected molded articles or blow molded articles. The instant invention is further directed to the use of the instant heterophasic polypropylene composition (HECO) for the preparation of moulded articles, preferably an injected molded articles or a blow molded articles, more preferably injected molded articles for mobility applications, preferably vehicle parts, even more preferably car parts, most preferably interior car parts.

In the following the present invention is further illustrated by means of examples.

## EXAMPLES

### A. Measuring methods

**$MFR_2$ (230 °C)** is measured according to ISO 1133 (230 °C, 2.16 kg load).

**Quantification of comonomer content by FTIR spectroscopy**

The comonomer content is determined by quantitative Fourier transform infrared spectroscopy (FTIR) after basic assignment calibrated via quantitative $^{13}C$ nuclear magnetic resonance (NMR) spectroscopy in a manner well known in the art. Thin films are pressed to a thickness of between 100-500 μm and spectra recorded in transmission mode. Specifically, the ethylene content of a polypropylene-co-ethylene copolymer is determined using the baseline corrected peak area of the quantitative bands found at 720-722 and 730-733 $cm^{-1}$. Specifically, the butene or hexene content of a polypropylene copolymer is determined using the baseline corrected peak area of the quantitative bands found at 1377-1379 $cm^{-1}$. Quantitative results are obtained based upon reference to the film thickness.

**The xylene cold solubles (XCS, wt.-%):** Content of xylene cold solubles (XCS) is determined at 25 °C according ISO 16152; first edition; 2005-07-01.

**Intrinsic viscosity** is measured according to DIN ISO 1628/1, October 1999 (in Decalin at 135 °C).

**Melting temperature $T_m$, crystallization temperature $T_c$,** is measured with Mettler TA820 differential scanning calorimetry (DSC) on 5-10 mg samples. Both crystallization and melting curves were obtained during 10 °C/min cooling and heating scans between 30 °C and 225 °C. Melting and crystallization temperatures were taken as the peaks of endotherms and exotherms.

Also the melt- and crystallization enthalpy (**Hm and Hc**) were measured by the DSC method according to ISO 11357-3.

**Tensile strength; Tensile strain at break** are measured according to ISO 527-2 (cross head speed = 50 mm/min; 23 °C) using injection molded specimens as described in EN ISO 1873-2 (dog bone shape, 4 mm thickness).

**Flexural Modulus** is determined in 3-point-bending according to ISO 178 on injection molded specimens of 80 x 10 x 4 mm prepared in accordance with ISO 294-1:1996.

**Izod notched impact strength** is determined according to ISO 180 / 1A at 23 °C by using injection moulded test specimens as described in EN ISO 1873-2 (80 x 10 x 4 mm).

**HDT** is determined according to ISO 75-2 at 0.45 MPa.

### B. Examples

All polymers were produced in a Borstar pilot plant with a prepolymerization reactor, one slurry loop reactor and two gas phase reactors. The catalyst used in the polymerization process for heterophasic propylene copolymer (HPP1) and heterophasic propylene copolymer (HPP2) was 1.9 wt.-% Ti-Ziegler-Natta-catalyst) with triethyl-aluminium (TEAL) as cocatalyst as described in EP 591 224of Borealis AG and dicyclo pentyl dimethoxy silane (D-Donor) as donor in amounts given in Table 1. Before the polymerization, the catalyst was prepolymerized with vinyl-cyclo-hexane (VCH) as described in EP 1 028 984 and EP 1 183 307. The weight ratio of VCH to catalyst of 1:1 was used in the preparation.

The preparation of heterophasic propylene copolymer (HPP1) comprising a polypropylene homopolymer matrix (H-MPP1) and an elastomeric propylene copolymer (EP1) as well as of heterophasic propylene copolymer (HPP2) comprising a polypropylene homopolymer matrix (H-MPP2) and an elastomeric propylene copolymer (EP2) is described in the following Table 1. The final Poly-VCH content in the obtained HPP1 and HPP2 was 200 ppm or less.

**Table 1:** Preparation of the polymer mixture (PM)

| Parameter | unit | HPP1 | HPP2 |
|---|---|---|---|
| Donor type | | D | D |
| Al/donor ratio | [mol/mol] | 15 | 15 |
| **Loop** | | | |
| -Split of total production | [wt.-%] | 47 | 37 |
| $H_2$/C3 | [mol/kmol] | 16 | 12 |

(continued)

| | | | |
|---|---|---|---|
| **Loop** | | | |
| $MFR_2$ (230 °C) | [g/10min] | 40 | 30 |
| XCS | [wt.-%] | 1.5 | 1.5 |
| **GPR 1** | | | |
| Split of total production | [wt.-%] | 34 | 37 |
| $H_2$/C3 | [mol/kmol] | 105 | 95 |
| $MFR_2$ | [g/10min] | 20 | 30 |
| XCS | [wt.-%] | 1.4 | 1.0 |
| **GPR 2** | | | |
| Split of total production | [wt.-%] | 19 | 26 |
| $H_2$/C2 | [mol/kmol] | 100 | 80 |
| C2/C3 | [mol/kmol] | 520 | 540 |
| $MFR_2$ (230 °C) | [g/10min] | 21 | 10 |
| XCS | [wt.-%] | 17.5 | 24 |
| IV of XCS | [dl/g] | 2.6 | 2.6 |
| C2 total | [wt.-%] | 7.5 | 11 |
| C2 of XCS | [wt.-%] | 34 | 38 |

Table 2 summarizes the composition of heterophasic propylene copolymer (HPP1) and heterophasic propylene copolymer (HPP2) which are blended for the inventive heterophasic polypropylene composition (HECO).

**Table 2:** Compound recipes for inventive examples

| Component | HPP1 formulation | HPP2 formulation |
|---|---|---|
| | [wt.-%] | [wt.-%] |
| Polymer HPP1 | 98.85 | - |
| Polymer HPP2 | - | 99.0 |
| Calcium stearate | 0.05 | 0.052 |
| Irganox 1010 | 0.033 | 0.033 |
| Irgafos 168 | 0.065 | 0.065 |
| GMS 95 | 0.300 | 0.150 |
| Talc | 0.700 | 0.700 |

Additives are conventional, commercially available products:

**Calcium stearate** is a commercial product "CaSt DW Veg" of Faci SpA.
**Irganox 1010** is a commercial antioxidant of Ciba Specialty Chemicals.
**Irgafos 168** is a commercial antioxidant of Ciba Specialty Chemicals.
**GMS95** is a commercial product "Dimodan HP-PEL" of Danisco.
**Talc** is a commercially talcum "Talc HM2" available from IMI Fabi.

Table 3 summarizes the recipe for compounding of the heterophasic propylene copolymer (HPP1) formulation and the heterophasic propylene copolymer (HPP2) formulation.

**Table 3:** Compound recipes for inventive examples

| Component | HECO formulation |
|---|---|
| | [wt.-%] |
| HPP1 formulation | 89.8 |
| HPP2 formulation | 10.0 |
| Cyasorb 3808 | 0.2 |

**Cyasorb 3808** is a commercial UV stabilizer of Cytec.
The property profiles of the inventive heterophasic polypropylene composition (HECO) in comparison to the HPP1 and HPP2 formulations are summarized in tables 4a and 4b.

**Table 4a:** Properties of the HPP1 and HPP2 formulations

| Property | Unit | HPP1 formulation | HPP2 formulation |
|---|---|---|---|
| MFR (230 °C) | [g/10min] | 21 | 11 |
| Flexural modulus | [MPa] | 1500 | 1200 |
| Tensile strength | [MPa] | 27 | 23 |
| Tensile strain at break | [%] | 20 | >200 |
| HDT (0.45 MPa) | [°C] | 100 | 95 |
| Izod, notched +23 °C | [kJ/m$^2$] | 6.5 | 15 |

**Table 4b:** Properties of the heterophasic polypropylene composition (HECO)

| Property | Unit | HECO |
|---|---|---|
| MFR (230 °C) | [g/10min] | 19 |
| XCS | [wt.-%] | 18.1 |
| IV of XCS | [dl/g] | 2.6 |
| C2 total | [wt.-%] | 7.9 |
| C2 of XCS | [wt.-%] | 35 |
| Flexural modulus | [MPa] | 1410 |
| Tensile strength | [MPa] | 26.7 |
| Tensile strain at break | [%] | 68 |
| HDT (0.45 MPa) | [°C] | 99.1 |
| Izod, notched +23 °C | [kJ/m$^2$] | 9.6 |

In comparison to the HPP1 formulation, the tensile strain at break (or elongation at break) of the inventive heterophasic polypropylene composition (HECO) is clearly superior. Furthermore, the notched impact strength is further improved.

## Claims

**1.** Heterophasic polypropylene composition (HECO) having a melt flow rate $MFR_2$ (230 °C) measured according to ISO 1133 of between 10 and 35 g/10min and a tensile strain at break measured according to ISO 527-2 in the range of between 40 and 150 %, said heterophasic polypropylene composition (HECO) comprises

(a) a heterophasic propylene copolymer (HPP1) comprising a polypropylene matrix (PM1) and an elastomeric

propylene copolymer (EP1) dispersed in said matrix (PM1), and
(b) a heterophasic propylene copolymer (HPP2) having a xylene cold soluble (XCS) fraction measured according to ISO 16152 (25 °C) of between 10 and 35 wt.-%, based on the total weight of the heterophasic propylene copolymer (HPP2), and comprising a polypropylene matrix (PM2) and an elastomeric propylene copolymer (EP2) dispersed in said matrix (PM2),
wherein

(i) the heterophasic propylene copolymer (HPP1) has lower tensile strain at break value measured according to ISO 527-2 than the heterophasic propylene copolymer (HPP2),
(ii) the amount of the heterophasic propylene copolymer (HPP1) is in the range of 75.0 to 99.0 wt.-% based on the total amount of the heterophasic propylene copolymer (HPP1) and the heterophasic propylene copolymer (HPP2) together,
(iii) the amount of the heterophasic propylene copolymer (HPP2) is in the range of 1.0 to 25.0 wt.-% based on the total amount of the heterophasic propylene copolymer (HPP1) and the heterophasic propylene copolymer (HPP2) together,
(iv) the elastomeric propylene copolymer (EP1) differs from the elastomeric propylene copolymer (EP2), and
(v) the polypropylene matrix (PM1) differs from the polypropylene matrix (PM2).

**2.** Heterophasic polypropylene composition (HECO) according to claim 1, wherein

(a) the elastomeric propylene copolymer (EP1) dispersed in the polypropylene matrix (PM1) and/or, preferably and, the elastomeric propylene copolymer (EP2) dispersed in the polypropylene matrix (PM2) comprises/comprise propylene monomer units and comonomer units selected from ethylene and/or $C_4$ to $C_{12}$ $\alpha$-olefin, preferably ethylene;
and preferably
(b) the polypropylene matrix (PM1) is polypropylene homopolymer matrix (H-MPP1) and/or the polypropylene matrix (PM2) is polypropylene homopolymer matrix (H-MPP2), preferably the polypropylene matrix (PM1) is polypropylene homopolymer matrix (H-MPP1) and the polypropylene matrix (PM2) is polypropylene homopolymer matrix (H-MPP2).

**3.** Heterophasic polypropylene composition (HECO) according to any one of the preceding claims, wherein

(a) the heterophasic propylene copolymer (HPP1) has a xylene cold soluble (XCS) fraction measured according to ISO 16152 (25 °C) of between 10 and 35 wt.-%, preferably of between 12 and 30 wt.-% and most preferably of between 15 and 25 wt.-%, based on the total weight of the heterophasic propylene copolymer (HPP1), and/or
(b) the heterophasic propylene copolymer (HPP2) has a xylene cold soluble (XCS) fraction measured according to ISO 16152 (25 °C) of between 14 and 30 wt.-% and most preferably of between 15 and 28 wt.-%, based on the total weight of the heterophasic propylene copolymer (HPP2),
or preferably
(c) both (a) and (b) features are met.

**4.** Heterophasic polypropylene composition (HECO) according to any one of the preceding claims, wherein the heterophasic propylene copolymer (HPP1) has at least one of the features (a) to (c), preferably all the features (a) to (c):

(a) a melt flow rate $MFR_2$ (230 °C) measured according to ISO 1133 of between 10 and 35 g/10min, preferably of between 12 and 30 g/10min and most preferably of between 15 and 25 g/10min,
(b) a comonomer content of between 5 and 20 wt.-%, preferably of between 5 and 15 wt.-% and most preferably of between 5 and 10 wt.-% based on the total weight of the heterophasic propylene copolymer (HPP1), wherein the comonomers are ethylene and/or $C_4$ to $C_{12}$ $\alpha$-olefin,
(c) a tensile strain at break measured according to ISO 527-2 of $\leq$ 50 %, more preferably of $\leq$ 45 % and still more preferably of between 10 and 40 %.

**5.** Heterophasic polypropylene composition (HECO) according to any one of the preceding claims, wherein the heterophasic propylene copolymer (HPP2) has at least one of the features (a) to (c), preferably all the features (a) to (c):

(a) a melt flow rate $MFR_2$ (230 °C) measured according to ISO 1133 of between 5 and 25 g/10min, preferably of between 5 and 20 g/10min and most preferably of between 8 and below 15 g/10min,

(b) a comonomer content of between 5 and 20 wt.-%, preferably of between 5 and 18 wt.-% and most preferably of between 8 and 15 wt.-% based on the total weight of the heterophasic propylene copolymer (HPP2), wherein the comonomers are ethylene and/or $C_4$ to $C_{12}$ $\alpha$-olefin,
(c) a tensile strain at break measured according to ISO 527-2 of at least 150 %, more preferably of at least 180 % and most preferably of between 200 and 400 %.

**6.** Heterophasic polypropylene composition (HECO) according to any one of the preceding claims, wherein the heterophasic polypropylene composition (HECO) comprises

(a) the heterophasic propylene copolymer (HPP1) in an amount from 80 to 98 wt.-% and the heterophasic propylene copolymer (HPP2) in an amount from 2 to 20 wt.-%, based on the total weight of the heterophasic polypropylene composition (HECO), preferably based on the total amount of the weight of the heterophasic propylene copolymer (HPP1) and of the heterophasic propylene copolymer (HPP2),
preferably
(b) the heterophasic propylene copolymer (HPP1) in an amount from 85 to 97 wt.-% and the heterophasic propylene copolymer (HPP2) in an amount from 3 to 15 wt.-%, based on the total weight of the heterophasic polypropylene composition (HECO), preferably based on the total amount of the weight of the heterophasic propylene copolymer (HPP1) and of the heterophasic propylene copolymer (HPP2).

**7.** Heterophasic polypropylene composition (HECO) according to any one of the preceding claims, wherein the tensile strain at break value for the heterophasic propylene copolymer (HPP2) differs from the tensile strain at break value for the heterophasic propylene copolymer (HPP1) by more than 100 %, preferably by a value of more than 130 %, more preferably by a value of more than 150 %., yet more preferably by a value of more than 180 %, wherein the difference is calculated by the formula

$$\text{TSaB [HPP2]} - \text{TSaB [HPP1]}$$

wherein

TSaB [HPP2] is the tensile strain at break value measured according to ISO 527-2 for the heterophasic propylene copolymer (HPP2), and
TSaB [HPP1] is the tensile strain at break value measured according to ISO 527-2 for the heterophasic propylene copolymer (HPP1).

**8.** Heterophasic polypropylene composition (HECO) according to any one of the preceding claims, wherein the heterophasic polypropylene composition (HECO) has in any combination at least one or more of the features (a) to (e), preferably has all the features (a) to (e):

(a) a melt flow rate $MFR_2$ (230 °C) measured according to ISO 1133 of between 10 and 35 g/10min, preferably of between 12 and 30 g/10min and most preferably of between 15 and 25 g/10min,
(b) a xylene cold soluble (XCS) fraction measured according to ISO 16152 (23 °C) of between 10 and 35 wt.-%, preferably of between 14 and 30 wt.-% and most preferably of between 15 and 28 wt.-%,
(c) a comonomer content of between 5 and 20 wt.-%, preferably of between 5 and 18 wt.-% and most preferably of between 8 and 15 wt.-% based on the total weight of the heterophasic polypropylene composition (HECO), wherein the comonomers are ethylene and/or $C_4$ to $C_{12}$ $\alpha$-olefin, preferably ethylene,
(d) a flexural modulus measured according to ISO 178 of at least 1200 MPa, preferably of between 1200 and 1800 MPa and most preferably of between 1300 and1600 MPa,
(e) a tensile strain at break measured according to ISO 527-2 between 60 and 150%.

**9.** Heterophasic polypropylene composition (HECO) according to any one of the preceding claims, wherein the heterophasic propylene copolymer (HPP1) and/or the heterophasic propylene copolymer (HPP2) are/is $\alpha$-nucleated, preferably the heterophasic propylene copolymer (HPP1) and the heterophasic propylene copolymer (HPP2) are $\alpha$-nucleated.

**10.** Heterophasic polypropylene composition (HECO) according to claim 9, wherein the $\alpha$-nucleation is accomplished by the use of a vinylcycloalkane, like a vinylcyclohexane (VCH), polymer and/or a vinylalkane polymer, preferably

by use of vinylcycloalkane, like a vinylcyclohexane (VCH), polymer.

**11.** Heterophasic polypropylene composition (HECO) according to any one of the preceding claims, wherein the heterophasic polypropylene composition (HECO) comprises at least one UV light stabilizer, preferably at least one hindered amine light stabilizer, preferably in an amount of between 0.1 and 0.5 wt.-% and preferably in an amount of between 0.1 and 0.3 wt.-%, based on the total weight of the heterophasic polypropylene composition (HECO).

**12.** Process for preparing a heterophasic polypropylene composition (HECO) according to any one of claims 1 to 11, comprising the steps of:

(a) blending the heterophasic propylene copolymer (HPP1) with the heterophasic propylene copolymer (HPP2) and optional additives in an extruder, and
(b) extruding the obtained blend of the heterophasic propylene copolymer (HPP1), the heterophasic propylene copolymer (HPP2) and optional additives in an extruder for forming extruded articles, preferably pellets of said heterophasic polypropylene composition (HECO), or for further introducing the obtained extrudeded blend to a further molding step for forming injection or blown molded, preferably injection molded articles, preferably for mobility applications, more preferably vehicle parts, most preferably car parts..

**13.** Process according to claim 12, wherein the heterophasic propylene copolymer (HPP1) is obtained by producing the polypropylene matrix (PM1) in at least one reactor system, said system comprises at least one reactor, transferring said polypropylene matrix (PM1) in a subsequent reactor system, said system comprises at least one reactor, where in the presence of the polypropylene matrix (PM1) the elastomeric propylene copolymer (EP1) is produced and/or the heterophasic propylene copolymer (HPP2) is obtained by producing the polypropylene matrix (PM2) in at least one reactor system, said system comprises at least one reactor, transferring said polypropylene matrix (PM2) in a subsequent reactor system, said system comprises at least one reactor, where in the presence of the polypropylene matrix (PM2) the elastomeric propylene copolymer (EP2) is produced,
wherein preferably during the preparation of the heterophasic propylene copolymer (HPP1) and/or of the heterophasic propylene copolymer (HPP2), $\alpha$-nucleation is effected by the use a vinylcycloalkane, like a vinylcyclohexane (VCH) polymer, wherein further preferably a modified catalyst, comprising a Ziegler-Natta procatalyst, an external donor and optionally a cocatalyst, is used in the polymerization process of the heterophasic propylene copolymer (HPP1) and the heterophasic propylene copolymer (HPP2) and the weight ratio of vinyl compound, to solid catalyst component in the modification step of the catalyst is preferably of up to 5 (5:1).

**14.** Article comprising, preferably consisting of, the heterophasic polypropylene composition (HECO) according to anyone of claims 1 to 11 and said article is a pellet or a moulded article, preferably an injected molded article or a blow molded article, more preferably said article is an injected molded article for mobility applications, still more preferably said article is an injected molded vehicle part, preferably a car part.

**15.** Use of a heterophasic polypropylene composition (HECO) according to anyone of claims 1 to 11 for the preparation of a molded article, preferably an injected molded article or a blow molded article, preferably for the preparation of an injected molded article for mobility applications, still more preferably for the preparation of an injected molded vehicle part, preferably a car part.

## Patentansprüche

**1.** Heterophasische Polypropylen-Zusammensetzung (HECO) mit einer Schmelzflussrate $MFR_2$ (230 °C), gemessen gemäß ISO 1133, zwischen 10 und 35 g/10 min und einer Bruchdehnung, gemessen gemäß ISO 527-2, im Bereich zwischen 40 und 150 %, wobei die heterophasische Polypropylen-Zusammensetzung (HECO) umfasst

(a) ein heterophasisches Propylencopolymer (HPP1), das eine Polypropylenmatrix (PM1) und ein in der Matrix (PM1) dispergiertes elastomeres Propylencopolymer (EP1) umfasst, und
(b) ein heterophasisches Propylencopolymer (HPP2) mit einer Xylol-kaltlöslichen (XCS) Fraktion, gemessen gemäß ISO 16152 (25 °C), zwischen 10 und 35 Gew.-%, bezogen auf das Gesamtgewicht des heterophasischen Propylencopolymers (HPP2), und umfassend eine Polypropylenmatrix (PM2) und ein in der Matrix (PM2) dispergiertes elastomeres Propylencopolymer (EP2),
wobei

(i) das heterophasische Propylencopolymer (HPP1) einen niedrigeren Wert der Bruchdehnung hat, gemessen nach ISO 527-2, als das heterophasische Propylencopolymer (HPP2),
(ii) die Menge des heterophasischen Propylencopolymers (HPP1) im Bereich von 75,0 bis 99,0 Gew.-% liegt, bezogen auf die Gesamtmenge des heterophasischen Propylencopolymers (HPP1) und des heterophasischen Propylencopolymers (HPP2) zusammen,
(iii) die Menge des heterophasischen Propylencopolymers (HPP2) im Bereich von 1,0 bis 25,0 Gew.-% liegt, bezogen auf die Gesamtmenge des heterophasischen Propylencopolymers (HPP1) und des heterophasischen Propylencopolymers (HPP2) zusammen,
(iv) sich das elastomere Propylencopolymer (EP1) vom elastomeren Propylencopolymer (EP2) unterscheidet, und
(v) die Polypropylen-Matrix (PM1) sich von der Polypropylen-Matrix (PM2) unterscheidet.

**2.** Heterophasische Polypropylen-Zusammensetzung (HECO) nach Anspruch 1, wobei

(a) das elastomere Propylencopolymer (EP1), das in der Polypropylenmatrix (PM1) dispergiert ist und/oder, vorzugsweise und, das elastomere Propylencopolymer (EP2), das in der Polypropylenmatrix (PM2) dispergiert ist, Propylenmonomereinheiten und Comonomereinheiten, ausgewählt aus Ethylen und/oder C4 bis C12 $\alpha$-Olefin, vorzugsweise Ethylen, umfasst/umfassen;
und vorzugsweise
(b) die Polypropylen-Matrix (PM1) eine Polypropylen-Homopolymermatrix (H-MPP1) ist und/oder die Polypropylen-Matrix (PM2) eine Polypropylen-Homopolymermatrix (H-MPP2) ist, vorzugsweise die Polypropylen-Matrix (PM1) eine Polypropylen-Homopolymermatrix (H-MPP1) und die Polypropylen-Matrix (PM2) eine Polypropylen-Homopolymermatrix (H-MPP2) ist.

**3.** Heterophasische Polypropylen-Zusammensetzung (HECO) nach einem der vorhergehenden Ansprüche, wobei

(a) das heterophasische Propylencopolymer (HPP1) eine Xylol-kaltlösliche (XCS) Fraktion, gemessen gemäß ISO 16152 (25 °C), von zwischen 10 und 35 Gew.-%, vorzugsweise von zwischen 12 und 30 Gew.-% und am meisten bevorzugt von zwischen 15 und 25 Gew.-%, bezogen auf das Gesamtgewicht des heterophasischen Propylencopolymers (HPP1), aufweist,
und/oder
(b) das heterophasische Propylencopolymer (HPP2) eine Xylol-kaltlösliche (XCS) Fraktion, gemessen nach ISO 16152 (25 °C), von zwischen 14 und 30 Gew.-% und am bevorzugtesten von zwischen 15 und 28 Gew.-%, bezogen auf das Gesamtgewicht des heterophasischen Propylencopolymers (HPP2), aufweist, oder vorzugsweise
(c) sowohl Merkmal (a) als auch (b) erfüllt ist.

**4.** Heterophasische Polypropylen-Zusammensetzung (HECO) nach einem der vorhergehenden Ansprüche, wobei das heterophasische Propylencopolymer (HPP1) mindestens eines der Merkmale (a) bis (c), vorzugsweise alle Merkmale (a) bis (c), aufweist:

(a) eine Schmelzflussrate $MFR_2$ (230 °C), gemessen nach ISO 1133, zwischen 10 und 35 g/10min, vorzugsweise zwischen 12 und 30 g/10min und am meisten bevorzugt zwischen 15 und 25 g/10min,
(b) einen Comonomergehalt zwischen 5 und 20 Gew.-%, vorzugsweise zwischen 5 und 15 Gew.-% und am meisten bevorzugt zwischen 5 und 10 Gew.-%, bezogen auf das Gesamtgewicht des heterophasischen Propylencopolymers (HPP1), wobei die Comonomere Ethylen und/oder C4- bis C12- $\alpha$-Olefin sind,
(c) eine Bruchdehnung gemessen nach ISO 527-2 von $\leq$ 50 %, vorzugsweise von $\leq$ 45 % und noch bevorzugter zwischen 10 und 40 %.

**5.** Heterophasische Polypropylen-Zusammensetzung (HECO) nach einem der vorhergehenden Ansprüche, wobei das heterophasische Propylencopolymer (HPP2) mindestens eines der Merkmale (a) bis (c), vorzugsweise alle Merkmale (a) bis (c), aufweist:

(a) eine Schmelzflussrate $MFR_2$ (230 °C), gemessen nach ISO 1133, zwischen 5 und 25 g/10min, vorzugsweise zwischen 5 und 20 g/10min und am meisten bevorzugt zwischen 8 und weniger als 15 g/10min,
(b) einen Comonomergehalt zwischen 5 und 20 Gew.-%, vorzugsweise zwischen 5 und 18 Gew.-% und am meisten bevorzugt zwischen 8 und 15 Gew.-%, bezogen auf das Gesamtgewicht des heterophasischen Propylencopolymers (HPP2), wobei die Comonomere Ethylen und/oder C4- bis C12- $\alpha$ -Olefin sind,

(c) eine Bruchdehnung gemessen nach ISO 527-2 von mindestens 150 %, vorzugsweise von mindestens 180 % und am meisten bevorzugt zwischen 200 und 400 %.

**6.** Heterophasische Polypropylen-Zusammensetzung (HECO) nach einem der vorhergehenden Ansprüche, wobei die heterophasische Polypropylen-Zusammensetzung (HECO) umfasst

(a) das heterophasische Propylencopolymer (HPP1) in einer Menge von 80 bis 98 Gew.-% und das heterophasische Propylencopolymer (HPP2) in einer Menge von 2 bis 20 Gew.-%, bezogen auf das Gesamtgewicht der heterophasischen Polypropylen-Zusammensetzung (HECO), vorzugsweise bezogen auf die Gesamtmenge des Gewichts des heterophasischen Propylencopolymers (HPP1) und des heterophasischen Propylencopolymers (HPP2),
vorzugsweise
(b) das heterophasische Propylencopolymer (HPP1) in einer Menge von 85 bis 97 Gew.-% und das heterophasische Propylencopolymer (HPP2) in einer Menge von 3 bis 15 Gew.-%, bezogen auf das Gesamtgewicht der heterophasischen Polypropylen-Zusammensetzung (HECO), vorzugsweise bezogen auf die Gesamtmenge des Gewichts des heterophasischen Propylencopolymers (HPP1) und des heterophasischen Propylencopolymers (HPP2).

**7.** Heterophasische Polypropylen-Zusammensetzung (HECO) nach einem der vorhergehenden Ansprüche, wobei sich der Wert der Bruchdehnung für das heterophasische Propylencopolymer (HPP2) von dem Wert der Bruchdehnung für das heterophasische Propylencopolymer (HPP1) um mehr als 100 %, vorzugsweise um einen Wert von mehr als 130 %, noch bevorzugter um einen Wert von mehr als 150 %, noch bevorzugter um einen Wert von mehr als 180 % unterscheidet, wobei die Differenz sich durch die Formel berechnet

$$\text{TSaB [HPP2] - TSaB [HPP1]}$$

wobei

TSaB [HPP2] der Wert der Bruchdehnung gemessen gemäß ISO 527-2 für das heterophasische Propylencopolymer (HPP2) ist, und
TSaB [HPP1] der Wert der Bruchdehnung gemessen gemäß ISO 527-2 für das heterophasische Propylencopolymer (HPP1) ist.

**8.** Heterophasische Polypropylen-Zusammensetzung (HECO) nach einem der vorhergehenden Ansprüche, wobei die heterophasische Polypropylen-Zusammensetzung (HECO) in beliebiger Kombination mindestens eines oder mehrere der Merkmale (a) bis (e) aufweist, vorzugsweise alle Merkmale (a) bis (e) aufweist:

(a) eine Schmelzflussrate $MFR_2$ (230 °C), gemessen gemäß ISO 1133, zwischen 10 und 35 g/10min, vorzugsweise zwischen 12 und 30 g/10min und am meisten bevorzugt zwischen 15 und 25 g/10min,
(b) eine Xylol-kaltlösliche (XCS) Fraktion, gemessen nach ISO 16152 (23 °C), zwischen 10 und 35 Gew.-%, vorzugsweise zwischen 14 und 30 Gew.-% und am meisten bevorzugt zwischen 15 und 28 Gew.-%,
(c) einen Comonomergehalt zwischen 5 und 20 Gew.-%, vorzugsweise zwischen 5 und 18 Gew.-% und am meisten bevorzugt zwischen 8 und 15 Gew.-%, bezogen auf das Gesamtgewicht der heterophasischen Polypropylen-Zusammensetzung (HECO), wobei die Comonomere Ethylen und/oder C4- bis C12 α-Olefin, vorzugsweise Ethylen, sind,
(d) ein Biegemodul gemessen nach ISO 178 von mindestens 1200 MPa, vorzugsweise zwischen 1200 und 1800 MPa und am meisten bevorzugt zwischen 1300 und 1600 MPa,
(e) eine Bruchdehnung gemessen gemäß ISO 527-2 zwischen 60 und 150 %.

**9.** Heterophasische Polypropylen-Zusammensetzung (HECO) nach einem der vorhergehenden Ansprüche, wobei das heterophasische Propylencopolymer (HPP1) und/oder das heterophasische Propylencopolymer (HPP2) α-nukleiert sind/ist, vorzugsweise das heterophasische Propylencopolymer (HPP1) und das heterophasische Propylencopolymer (HPP2) α-nukleiert sind.

**10.** Heterophasische Polypropylen-Zusammensetzung (HECO) nach Anspruch 9, wobei die α-Keimbildung durch die Verwendung eines Vinylcycloalkans, wie ein Vinylcyclohexan (VCH), Polymer und/oder eines Vinylalkan-Polymers,

vorzugsweise durch die Verwendung von Vinylcycloalkan, wie ein Vinylcyclohexan (VCH), Polymer, erreicht wird.

**11.** Heterophasische Polypropylen-Zusammensetzung (HECO) nach einem der vorhergehenden Ansprüche, wobei die heterophasische Polypropylen-Zusammensetzung (HECO) mindestens einen UV-Licht-Stabilisator, vorzugsweise mindestens einen gehinderten Amin-Lichtstabilisator, vorzugsweise in einer Menge zwischen 0,1 und 0,5 Gew.-% und vorzugsweise in einer Menge zwischen 0,1 und 0,3 Gew.-%, bezogen auf das Gesamtgewicht der heterophasischen Polypropylen-Zusammensetzung (HECO), umfasst.

**12.** Verfahren zur Herstellung einer heterophasischen Polypropylen-Zusammensetzung (HECO) nach einem der Ansprüche 1 bis 11, umfassend die folgenden Schritte:

(a) Mischen des heterophasischen Propylencopolymers (HPP1) mit dem heterophasischen Propylencopolymer (HPP2) und optionalen Additiven in einem Extruder, und
(b) Extrudieren der erhaltenen Mischung des heterophasischen Propylencopolymers (HPP1), des heterophasischen Propylencopolymers (HPP2) und optionaler Additive in einem Extruder zur Bildung extrudierter Gegenstände, vorzugsweise Pellets der heterophasischen Polypropylen-Zusammensetzung (HECO), oder zur weiteren Einführung der erhaltenen extrudierten Mischung in einen weiteren Formschritt zur Bildung spritz- oder blasgeformter, vorzugsweise spritzgegossener Gegenstände, vorzugsweise für Mobilitätsanwendungen, noch bevorzugter Fahrzeugteile, am meisten bevorzugt Autoteile.

**13.** Verfahren nach Anspruch 12, wobei das heterophasische Propylencopolymer (HPP1) durch Herstellung der Polypropylenmatrix (PM1) in mindestens einem Reaktorsystem erhalten wird, wobei das System mindestens einen Reaktor umfasst, Überführen der Polypropylenmatrix (PM1) in ein nachfolgendes Reaktorsystem, wobei das System mindestens einen Reaktor umfasst, wobei in Gegenwart der Polypropylenmatrix (PM1) das elastomere Propylencopolymer (EP1) hergestellt wird und/oder das heterophasische Propylencopolymer (HPP2) durch Herstellung der Polypropylenmatrix (PM2) in mindestens einem Reaktorsystem erhalten wird, wobei dieses System mindestens einen Reaktor umfasst, der die Polypropylenmatrix (PM2) in ein nachfolgendes Reaktorsystem überführt, wobei dieses System mindestens einen Reaktor umfasst, wobei in Gegenwart der Polypropylenmatrix (PM2) das elastomere Propylencopolymer (EP2) hergestellt wird,
wobei vorzugsweise während der Herstellung des heterophasischen Propylencopolymers (HPP1) und/oder des heterophasischen Propylencopolymers (HPP2), die $\alpha$-Nukleierung durch die Verwendung eines Vinylcycloalkans, wie eines Vinylcyclohexan (VCH)-Polymers, bewirkt wird,
wobei ferner vorzugsweise ein modifizierter Katalysator, umfassend einen Ziegler-Natta-Prokatalysator, einen externen Donor und gegebenenfalls einen Cokatalysator, in dem Polymerisationsverfahren des heterophasischen Propylencopolymers (HPP1) und des heterophasischen Propylencopolymers (HPP2) verwendet wird und das Gewichtsverhältnis von Vinylverbindung zu fester Katalysatorkomponente in der Modifizierungsstufe des Katalysators vorzugsweise bis zu 5 (5:1) beträgt.

**14.** Gegenstand, der die heterophasischen Polypropylen-Zusammensetzung (HECO) nach einem der Ansprüche 1 bis 11 enthält, vorzugsweise aus dieser besteht und ein Pellet oder ein geformter Gegenstand, vorzugsweise ein spritzgegossener Gegenstand oder ein blasgegossener Gegenstand, noch bevorzugter ein spritzgegossener Gegenstand für Mobilitätsanwendungen, noch bevorzugter ein spritzgegossenes Fahrzeugteil, vorzugsweise ein Autoteil ist.

**15.** Verwendung einer heterophasischen Polypropylen-Zusammensetzung (HECO) nach einem der Ansprüche 1 bis 11 zur Herstellung eines geformten Gegenstandes, vorzugsweise eines spritzgegossenen oder blasgegossenen Gegenstandes, vorzugsweise zur Herstellung eines spritzgegossenen Gegenstandes für Mobilitätsanwendungen, noch bevorzugter zur Herstellung eines spritzgegossenen Fahrzeugteils, vorzugsweise eines Autoteils.

## Revendications

**1.** Composition de polypropylène hétérophasique (HECO) ayant un indice de fluage $MFR_2$ (230°C), mesuré conformément à la norme ISO 1133, compris entre 10 et 35 g/10 min et une déformation en traction à la rupture, mesurée conformément à la norme ISO 527-2, dans la plage comprise entre 40 et 150 %, ladite composition de polypropylène hétérophasique (HECO) comprenant

(a) un copolymère de propylène hétérophasique (HPP1) comprenant une matrice de polypropylène (PM1) et un copolymère de propylène élastomère (EP1) dispersé dans ladite matrice (PM1), et

(b) un copolymère de propylène hétérophasique (HPP2) ayant une fraction soluble à froid dans le xylène (CXS), mesurée conformément à la norme ISO 16152 (25°C), comprise entre 10 et 35 % en poids basés sur le poids total du copolymère de propylène hétérophasique (HPP2), et comprenant une matrice de polypropylène (PM2) et un copolymère de propylène élastomère (EP2) dispersé dans ladite matrice (PM2),
dans laquelle

(i) le copolymère de propylène hétérophasique (HPP1) a une valeur de déformation en traction à la rupture, mesurée conformément à la norme ISO 527-2, inférieure à celle du copolymère de propylène hétérophasique (HPP2),
(ii) la quantité du copolymère de propylène hétérophasique (HPP1) est dans la plage de 75,0 à 99,0 % en poids basés sur la quantité totale du copolymère de propylène hétérophasique (HPP1) et du copolymère de propylène hétérophasique (HPP2) ensemble,
(iii) la quantité du copolymère de propylène hétérophasique (HPP2) est dans la plage de 1,0 à 25,0 % en poids basés sur la quantité totale du copolymère de propylène hétérophasique (HPP1) et du copolymère de propylène hétérophasique (HPP2) ensemble,
(iv) le copolymère de propylène élastomère (EP1) diffère du copolymère de propylène élastomère (EP2), et
(v) la matrice de polypropylène (PM1) diffère de la matrice de polypropylène (PM2).

**2.** Composition de polypropylène hétérophasique (HECO) selon la revendication 1, dans laquelle

(a) le copolymère de propylène élastomère (EP1) dispersé dans la matrice de polypropylène (PM1), et/ou, de préférence et, le copolymère de propylène élastomère (EP2) dispersé dans la matrice de polypropylène (PM2), comprennent des motifs monomères de propylène et des motifs comonomères choisis parmi l'éthylène et/ou une $\alpha$-oléfine en $C_4$ à $C_{12}$, de préférence l'éthylène ;
et de préférence
(b) la matrice de polypropylène (PM1) est une matrice d'homopolymère de polypropylène (H-MPP1) et/ou la matrice de polypropylène (PM2) est une matrice d'homopolymère de polypropylène (H-MPP2), de préférence la matrice de polypropylène (PM1) est une matrice d'homopolymère de polypropylène (H-MPP1) et la matrice de polypropylène (PM2) est une matrice d'homopolymère de polypropylène (H-MPP2).

**3.** Composition de polypropylène hétérophasique (HECO) selon l'une quelconque des revendications précédentes, dans laquelle

(a) le copolymère de propylène hétérophasique (HPP1) a une fraction soluble à froid dans le xylène (XCS), mesurée conformément à la norme ISO 16152 (25°C), comprise entre 10 et 35 % en poids, de préférence entre 12 et 30 % en poids et le plus préférablement entre 15 et 25 % en poids basés sur le poids total du copolymère de propylène hétérophasique (HPP1) ,
et/ou
(b) le copolymère de propylène hétérophasique (HPP2) a une fraction soluble à froid dans le xylène (XCS), mesurée conformément à la norme ISO 16152 (25°C), comprise entre 14 et 30 % en poids, et le plus préférablement entre 15 et 28 % en poids basés sur le poids total du copolymère de propylène hétérophasique (HPP2),
ou de préférence
(c) les deux caractéristiques (a) et (b) sont satisfaites.

**4.** Composition de polypropylène hétérophasique (HECO) selon l'une quelconque des revendications précédentes, dans laquelle le copolymère de propylène hétérophasique (HPP1) a au moins l'une des caractéristiques (a) à (c), de préférence toutes les caractéristiques (a) à (c) :

(a) un indice de fluage $MFR_2$ (230°C), mesuré conformément à la norme ISO 1133, compris entre 10 et 35 g/10 min, de préférence entre 12 et 30 g/10 min et le plus préférablement compris entre 15 et 25 g/10 min,
(b) une teneur en comonomères comprise entre 5 et 20 % en poids, de préférence entre 5 et 15 % en poids, et tout spécialement entre 5 et 10 % en poids basés sur le poids total du copolymère de propylène hétérophasique (HPP1), dans laquelle les comonomères sont l'éthylène et/ou une $\alpha$-oléfine en $C_4$ à $C_{12}$,
(c) une déformation en traction à la rupture, conformément à la norme ISO 527-2, $\leq$ 50 %, plus préférablement $\leq$ 45 % et encore plus préférablement comprise entre 10 et 40 %.

**5.** Composition de polypropylène hétérophasique (HECO) selon l'une quelconque des revendications précédentes, dans laquelle le copolymère de propylène hétérophasique (HPP2) a au moins l'une des caractéristiques (a) à (c),

de préférence toutes les caractéristiques (a) à (c) :

(a) un indice de fluage $MFR_2$ (230°C), mesuré conformément à la norme ISO 1133, compris entre 5 et 25 g/10 min, de préférence entre 5 et 20 g/10 min et le plus préférablement compris entre 8 et moins de 15 g/10 min,
(b) une teneur en comonomères comprise entre 5 et 20 % en poids, de préférence entre 5 et 18 % en poids, et tout spécialement entre 8 et 15 % en poids basés sur le poids total du copolymère de propylène hétérophasique (HPP2), dans laquelle les comonomères sont l'éthylène et/ou une $\alpha$-oléfine en $C_4$ à $C_{12}$,
(c) une déformation en traction à la rupture, mesurée conformément à la norme ISO 527-2, d'au moins 150 %, plus préférablement d'au moins 180 % et le plus préférablement comprise entre 200 et 400 %.

**6.** Composition de polypropylène hétérophasique (HECO) selon l'une quelconque des revendications précédentes, dans laquelle la composition de polypropylène hétérophasique (HECO) comprend

(a) le copolymère de propylène hétérophasique (HPP1) en une quantité de 80 à 98 % en poids et le copolymère de propylène hétérophasique (HPP2) en une quantité de 2 à 20 % en poids basés sur le poids total de la composition de polypropylène hétérophasique (HECO), de préférence basés sur la quantité totale du poids du copolymère de propylène hétérophasique (HPP1) et du copolymère de propylène hétérophasique (HPP2), de préférence
(b) le copolymère de propylène hétérophasique (HPP1) en une quantité de 85 à 97 % en poids et le copolymère de propylène hétérophasique (HPP2) en une quantité de 3 à 15 % en poids basés sur le poids total de la composition de polypropylène hétérophasique (HECO), de préférence basés sur la quantité totale du poids du copolymère de propylène hétérophasique (HPP1) et du copolymère de propylène hétérophasique (HPP2).

**7.** Composition de polypropylène hétérophasique (HECO) selon l'une quelconque des revendications précédentes, dans laquelle la déformation en traction à la rupture du copolymère de propylène hétérophasique (HPP2) diffère de la déformation en traction à la rupture du copolymère de propylène hétérophasique (HPP1) de plus de 100 %, de préférence d'une valeur de plus de 130 %, plus préférablement d'une valeur de plus de 150 %, encore plus préférablement d'une valeur de plus de 180 %, dans laquelle la différence est calculée par la formule

$$TSaB\ [HPP2] - TSaB\ [HPP1]$$

dans laquelle

TSaB [HPP2] est la valeur de déformation en traction à la rupture, mesurée conformément à la norme ISO 527-2, du copolymère de propylène hétérophasique (HPP2), et
TSaB [HPP1] est la valeur de déformation en traction à la rupture, mesurée conformément à la norme ISO 527-2, du copolymère de propylène hétérophasique (HPP1).

**8.** Composition de polypropylène hétérophasique (HECO) selon l'une quelconque des revendications précédentes, dans laquelle la composition de polypropylène hétérophasique (HECO) a en n'importe quelle combinaison au moins une ou plusieurs des caractéristiques (a) à (e), de préférence a toutes les caractéristiques (a) à (e) :

(a) un indice de fluage $MFR_2$ (230°C), mesuré conformément à la norme ISO 1133, compris entre 10 et 35 g/10 min, de préférence entre 12 et 30 g/10 min et tout spécialement entre 15 et 25 g/10 min,
(b) une fraction soluble à froid dans le xylène (XCS), mesurée conformément à la norme ISO 16152 (23°C), comprise entre 10 et 35 % en poids, de préférence entre 14 et 30 % en poids et le plus préférablement entre 15 et 28 % en poids,
(c) une teneur en comonomères comprise entre 5 et 20 % en poids, de préférence entre 5 et 18 % en poids et le plus préférablement entre 8 et 15 % en poids basés sur le poids total de la composition de polypropylène hétérophasique (HECO), dans laquelle les comonomères sont l'éthylène et/ou une $\alpha$-oléfine en $C_4$ à $C_{12}$, de préférence l'éthylène,
(d) un module de flexion, mesuré conformément à la norme ISO 178, d'au moins 1200 MPa, de préférence compris entre 1200 et 1800 MPa et le plus préférablement compris entre 1300 et 1600 MPa,
(e) une déformation en traction à la rupture, mesurée conformément à la norme ISO 527-2, comprise entre 60 et 150 %.

**9.** Composition de polypropylène hétérophasique (HECO) selon l'une quelconque des revendications précédentes, dans laquelle le copolymère de propylène hétérophasique (HPP1) et/ou le copolymère de propylène hétérophasique (HPP2) sont $\alpha$-nucléés, de préférence le copolymère de propylène hétérophasique (HPP1) et le copolymère de propylène hétérophasique (HPP2) sont $\alpha$-nucléés.

**10.** Composition de polypropylène hétérophasique (HECO) selon la revendication 9, dans laquelle l'a-nucléation est accomplie par l'utilisation d'un vinylcycloalcane, tel qu'un polymère de vinylcyclohexane (VCH) et/ou un polymère de vinylalcane, de préférence par l'utilisation de vinylcycloalcane, tel qu'un polymère de vinylcyclohexane (VCH).

**11.** Composition de polypropylène hétérophasique (HECO) selon l'une quelconque des revendications précédentes, dans laquelle la composition de polypropylène hétérophasique (HECO) comprend au moins un agent stabilisant à la lumière UV, de préférence au moins un agent stabilisant à la lumière de type amine encombrée, de préférence en une quantité comprise entre 0,1 et 0,5 % en poids et de préférence en une quantité comprise entre 0,1 et 0,3 % en poids basé sur le poids total de la composition de polypropylène hétérophasique (HECO).

**12.** Procédé pour préparer une composition de polypropylène hétérophasique (HECO) de l'une quelconque des revendications 1 à 11, comprenant les étapes de :

(a) mélange du copolymère de propylène hétérophasique (HPP1) avec le copolymère de propylène hétérophasique (HPP2) et des additifs optionnels dans une extrudeuse, et
(b) extrusion du mélange obtenu du copolymère de propylène hétérophasique (HPP1), du copolymère de propylène hétérophasique (HPP2) et des additifs optionnels dans une extrudeuse pour former des articles extrudés, de préférence des pastilles de ladite composition de polypropylène hétérophasique (HECO), ou pour introduire encore le mélange extrudé obtenu dans une autre étape de moulage pour former des articles moulés par injection ou moulés par soufflage, de préférence des articles moulés par injection, de préférence pour des applications de mobilité, plus préférablement des pièces de véhicule, le plus préférablement des pièces de voiture.

**13.** Procédé selon la revendication 12, dans lequel le copolymère de propylène hétérophasique (HPP1) est obtenu par production de la matrice de polypropylène (PM1) dans au moins un système de réacteur, ledit système comprenant au moins un réacteur, transfert de ladite matrice de propylène (PM1) dans un système de réacteur subséquent, ledit système comprenant au moins un réacteur, où, en présence de la matrice de polypropylène (PM1), le copolymère de propylène élastomère (EP1) est produit, et/ou le copolymère de propylène hétérophasique (HPP2) est obtenu par production de la matrice de polypropylène (PM2) dans au moins un système de réacteur, ledit système comprenant au moins un réacteur, transfert de ladite matrice de propylène (PM2) dans un système de réacteur subséquent, ledit système comprenant au moins un réacteur, où, en présence de la matrice de polypropylène (PM2), le copolymère de propylène élastomère (EP2) est produit,
dans lequel de préférence, durant la préparation du copolymère de propylène hétérophasique (HPP1) et/ou du copolymère de propylène hétérophasique (HPP2), une $\alpha$-nucléation est effectuée par l'utilisation d'un vinylcycloalcane, tel qu'un polymère de vinylcyclohexane (VCH), dans lequel de préférence en outre un catalyseur modifié, comprenant un pro-catalyseur de Ziegler-Natta, un donneur externe et optionnellement un co-catalyseur, est utilisé dans le procédé de polymérisation du copolymère de propylène hétérophasique (HPP1) et du copolymère de propylène hétérophasique (HPP2), et le rapport en poids du composé vinylique sur le composant de catalyseur solide dans l'étape de modification du catalyseur va de préférence jusqu'à 5 (5/1).

**14.** Article comprenant, de préférence consistant en, la composition de polypropylène hétérophasique (HECO) de l'une quelconque des revendications 1 à 11, lequel article est une pastille ou un article moulé, de préférence un article moulé par injection ou un article moulé par soufflage, plus préférablement lequel article est un article moulé par injection pour des applications de mobilité, encore plus préférablement ledit article est une pièce de véhicule moulée par injection, de préférence une pièce de voiture.

**15.** Utilisation d'une composition de polypropylène hétérophasique (HECO) de l'une quelconque des revendications 1 à 11 pour la préparation d'un article moulé, de préférence d'un article moulé par injection ou d'un article moulé par soufflage, plus préférablement pour la préparation d'un article moulé par injection pour des applications de mobilité, encore plus préférablement pour la préparation d'une pièce de véhicule moulée par injection, de préférence d'une pièce de voiture.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2010142540 A1
- WO 2012025584 A1
- WO 9924478 A
- WO 9924479 A
- WO 0068315 A
- EP 0887379 A1
- WO 9212182 A
- WO 2004000899 A
- WO 2004111095 A
- WO 8707620 A
- WO 9219653 A
- WO 9219658 A
- EP 0491566 A
- EP 591224 A
- EP 1028984 A
- EP 1183307 A


### Non-patent literature cited in the description


- *CHEMICAL ABSTRACTS,* 9010-79-1
- *CHEMICAL ABSTRACTS,* 6683-19-8
- *CHEMICAL ABSTRACTS,* 2082-79-3
- *CHEMICAL ABSTRACTS,* 32509-66-3
- *CHEMICAL ABSTRACTS,* 23128-74-7
- *CHEMICAL ABSTRACTS,* 90498-90-1
- *CHEMICAL ABSTRACTS,* 35074-77-2
- *CHEMICAL ABSTRACTS,* 36443-68-2
- *CHEMICAL ABSTRACTS,* 171090-93-0
- *CHEMICAL ABSTRACTS,* 125643-61-0
- *CHEMICAL ABSTRACTS,* 31570-04-4
- *CHEMICAL ABSTRACTS,* 38613-77-3
- *CHEMICAL ABSTRACTS,* 26741-53-7
- *CHEMICAL ABSTRACTS,* 3806-34-6
- *CHEMICAL ABSTRACTS,* 26523-78-4
- *CHEMICAL ABSTRACTS,* 80693-00-1
- *CHEMICAL ABSTRACTS,* 126050-54-2
- *CHEMICAL ABSTRACTS,* 68958-97-4
- *CHEMICAL ABSTRACTS,* 13003-12-8
- *CHEMICAL ABSTRACTS,* 154862-43-8
- *CHEMICAL ABSTRACTS,* 145650-60-8
- *CHEMICAL ABSTRACTS,* 80410-33-9
- *CHEMICAL ABSTRACTS,* 161717-32-4
- *CHEMICAL ABSTRACTS,* 118337-09-0
- *CHEMICAL ABSTRACTS,* 203255-81-6
- *CHEMICAL ABSTRACTS,* 147192-62-9
- *CHEMICAL ABSTRACTS,* 80326-98-3
- *CHEMICAL ABSTRACTS,* 52829-07-9
- *CHEMICAL ABSTRACTS,* 41556-26-7
- *CHEMICAL ABSTRACTS,* 64022-61-3
- *CHEMICAL ABSTRACTS,* 91788-83-9
- *CHEMICAL ABSTRACTS,* 84696-72-0
- *CHEMICAL ABSTRACTS,* 84696-71-9
- *CHEMICAL ABSTRACTS,* 124172-53-8
- *CHEMICAL ABSTRACTS,* 71878-19-8
- *CHEMICAL ABSTRACTS,* 106990-43-6
- *CHEMICAL ABSTRACTS,* 129757-67-1
- *CHEMICAL ABSTRACTS,* 112-84-5
- *CHEMICAL ABSTRACTS,* 301-02-0